# EUROPÄISCHE PATENTANMELDUNG

(11) **EP 4 813 875 A2**
(43) Veröffentlichungstag der Anmeldung: **30.09.2026**
(21) Anmeldenummer: 26199032.9
(22) Anmeldetag: 23.08.2023
(51) Int. Cl.: B65G 1/04, B65G 1/06, B65G 65/00

(54) **ÜBERGABESTATION FÜR EINEN LADUNGSTRÄGER SOWIE VERFAHREN ZUR ÜBERGABE EINES LADUNGSTRÄGERS**

(30) Priorität: 24.08.2022 DE 102022121352
(62) Dokumentnummer(n) der früheren Anmeldung(en) nach Art. 76 EPÜ: 23192838.3 / 4 328 153
(71) Anmelder: Gebhardt Fördertechnik GmbH, 74889 Sinsheim (DE)
(72) Erfinder: Gebhardt, Marco, 74889 Sinsheim (DE); Branner, Fabian, 74915 Waibstadt (DE); Napetschnig, Günther, 6845 Hohenems (AT)
(74) Vertreter: Patentanwälte und Rechtsanwalt Weiß, Arat & Partner mbB

(57) **Zusammenfassung**

Übergabestation (1) für die Übergabe eines Ladungsträgers (15) von einem ersten Fahrzeug (19, 20) auf ein zweites Fahrzeug (19, 20) und umgekehrt oder von einem ersten Fahrzeug (19, 20) auf ein Fördermittel (26) und umgekehrt umfasst einen ersten Eingang (2) umfasst, welcher die Einfahrt des ersten Fahrzeugs (19, 20) erlaubt, und wobei die Übergabestation (1) gegenüber dem ersten Eingang (2) entweder einen zweiten Eingang (3) umfasst, welcher die Einfahrt des zweiten Fahrzeugs (19, 20) erlaubt, oder sich an das Fördermittel (26) anschliesst, wobei die Übergabestation (1) zumindest einen Abstell- und Aufnahmeplatz (4, 21) für den Ladungsträger (15) umfasst, an welchem das erste Fahrzeug (19, 20) den Ladungsträger (15) abstellen und aufnehmen kann, und ist gekennzeichnet durch zumindest ein Zentriermittel (5, 6) zur Zentrierung eines Ladungsträgers, wobei das Zentriermittel (5, 6) derart in der Übergabestation (1) angeordnet ist, dass bei der Übergabe des Ladungsträgers (15) von dem zweiten Fahrzeug (20) an das erste Fahrzeug (19) oder von dem Fördermittel (26) an das erste Fahrzeug (19, 20) eine Zentrierung erfolgen kann.

## Beschreibung

### Technisches Gebiet

Die Erfindung betrifft eine Übergabestation für einen Ladungsträger sowie ein Verfahren zur Übergabe eines Ladungsträgers gemäss den unabhängigen Ansprüchen.

### Stand der Technik

Übergabestationen zur Übergabe von Ladungsträgern sind grundsätzlich bekannt.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Patentansprüche. Vorteilhafte Ausgestaltungen sind in den abhängigen Ansprüchen beschrieben.

Eine Übergabestation für die Übergabe eines Ladungsträgers von einem ersten Fahrzeug auf ein zweites Fahrzeug und umgekehrt oder von einem ersten Fahrzeug auf ein Fördermittel und umgekehrt umfasst einen ersten Eingang, welcher die Einfahrt des ersten Fahrzeugs erlaubt. Gegenüber dem ersten Eingang umfasst die Übergabestation entweder einen zweiten Eingang, welcher die Einfahrt des zweiten Fahrzeugs erlaubt, oder die Übergabestation schliesst sich dort an das Fördermittel an. Die Übergabestation umfasst zumindest einen Abstell- und Aufnahmeplatz für den Ladungsträger, an welchem das erste Fahrzeug den Ladungsträger abstellen und aufnehmen kann. Die Übergabestation umfasst zumindest ein Zentriermittel zur Zentrierung eines Ladungsträgers, wobei das Zentriermittel derart in der Übergabestation angeordnet ist, dass bei der Übergabe des Ladungsträgers von dem zweiten Fahrzeug an das erste Fahrzeug oder von dem Fördermittel an das erste Fahrzeug eine Zentrierung erfolgen kann.

Die Zentriermittel erhöhen die Betriebssicherheit und Verfügbarkeit und vermeiden Störungen, was nachstehend noch ausführlich erörtert wird.

Ein einziges Zentriermittel kann ausreichend sein. Oftmals werden jedoch Zentriermittel-Paare eingesetzt. Diese können symmetrisch innerhalb der Übergabestation angeordnet sein, wie die nachstehend noch näher beschriebenen Zentrier-Schienen-Paare.

Vorzugsweise kann eine Zentrierung nicht nur bei der Übergabe des Ladungsträgers von dem zweiten Fahrzeug an das erste Fahrzeug oder von dem Fördermittel an das erste Fahrzeug erfolgen, sondern auch umgekehrt. In beiden Fällen ist das erste Fahrzeug vorzugsweise ein Shuttle.

Der Abstell- und Aufnahmeplatz ist vorzugsweise derjenige Abschnitt, auf welchem ein vollständig in die Übergabestation eingefahrenes Fahrzeug den Ladungsträger abstellt.

Die Übergabe eines Ladungsträgers von dem ersten Fahrzeug auf das zweite Fahrzeug "und umgekehrt" sowie von dem ersten Fahrzeug auf das Fördermittel "und umgekehrt" meint hierbei vorzugsweise, dass die Übergabe beispielsweise entweder vom ersten Fahrzeug auf das zweite oder vom zweiten Fahrzeug auf das erste erfolgen kann, also beide Übergabe-Richtungen möglich sind.

Es sind zahlreiche Varianten der Übergabestation denkbar, welche sich sowohl hinsichtlich des Aufbaus als auch hinsichtlich der Mittel, d.h. Fahrzeuge, Fördermittel, etc., unterscheiden können, zwischen denen der Ladungsträger ausgetauscht wird. Obwohl zahlreiche Variationen und Modifikationen denkbar sind, kann im Rahmen der vorliegenden Erfindung insbesondere an drei grundlegende Varianten der Übergabestation gedacht sein. Die vorliegende Erfindung ist jedoch nicht auf die drei nachstehend in Grundzügen dargestellten Varianten beschränkt; ferner sind zahlreiche Modifikationen und Variationen dieser drei Varianten denkbar.

Gemäss einer ersten Variante kann die Übergabestation bewegbare Fahrschienen umfassen, welche nachstehend noch näher erläutert werden. Gemäss dieser ersten Variante umfasst die Übergabestation weiterhin vorzugsweise einen passiven Abstell- und Aufnahmeplatz, beispielsweise in Form einer Abstell-Schiene. Zentriermittel können an oder auf diesen Abstell-Schienen montiert sein. Beispielsweise kann an seitliche Zentrier-Schienen gedacht sein, welche im Wesentlichen parallel zu den Abstell-Schienen verlaufen. Alternativ oder zusätzlich kann an Zentrier-Anschläge gedacht sein, welche auf den Abstell-Schienen montiert sind, und deren Zentrier-Flächen orthogonal zu einer Längsrichtung der Abstell-Schienen verlaufen. Gemäss der ersten Variante umfasst die Übergabestation einen einzigen Abstell- und Aufnahmeplatz sowie beidseits des Abstell- und Aufnahmeplatzes einander gegenüberliegend angeordnet jeweils einen Eingang. Hierbei dient einer der Eingänge der Einfahrt des Shuttles und der gegenüberliegende Eingang der Einfahrt des Flurförderzeugs. Gemäss der ersten Variante erlaubt die Übergabestation die Übergabe eines Ladungsträgers von einem Shuttle auf ein Flurförderzeug und umgekehrt, beispielsweise auf ein nachstehend näher besprochenes FTS. Das Shuttle und das Flurförderzeug benutzen hierbei denselben Abstell- und Aufnahmeplatz. Details und Variationen der vorstehend geschilderten ersten Variante der Übergabestation sind denkbar und werden nachstehend erläutert.

Zur Bewegung der bewegbaren Fahrschienen kann die Übergabestation einen Antrieb umfassen. Dieser Antrieb kann ein Motor sein. Insbesondere kann an einen Exzenterantrieb gedacht sein, welcher beispielsweise über ein Koppelgetriebe mit den Fahrschienen verbunden ist.

Gemäss einer zweiten Variante der Übergabestation umfasst diese einen aktiven Abstell- und Aufnahmeplatz, welcher beispielsweise von Kettenförderern oder anderen geeigneten Fördermitteln, insbesondere von einem geeigneten Stetigförderer, gebildet sein kann. Dieser wird im Rahmen der vorliegenden Erfindung als "Übergabeförderer" bezeichnet. Die Übergabestation gemäss der zweiten Variante umfasst ebenso wie die erste Variante ein Zentriermittel. Gemäss der zweiten Variante erlaubt die Übergabestation die Übergabe eines Ladungsträgers von einem Fahrzeug, insbesondere von einem Shuttle, auf ein Fördermittel, insbesondere auf einen Stetigförderer wie beispielsweise einen Kettenförderer, und umgekehrt. Die Fahrschienen der zweiten Variante sind vorzugsweise nicht bewegbar, d.h. nicht klappbar oder schwenkbar, sondern starr in der Übergabestation angeordnet. Die zweite Variante der Übergabestation umfasst vorzugsweise einen einzigen Abstell- und Aufnahmeplatz, welcher von dem o.g. Übergabeförderer gebildet wird.

Gemäss einer dritten Variante der Übergabestation umfasst diese einen aktiven Abstell- und Aufnahmeplatz, welcher als Übergabeförderer ausgebildet sein kann, wie vorstehend im Hinblick auf die zweite Variante beschrieben. Allerdings umfasst er beidseits des Abstell- und Aufnahmeplatzes einander gegenüberliegend angeordnet jeweils einen Eingang. Hierbei dient ein Eingang der Einfahrt des Shuttles und der gegenüberliegende Eingang der Einfahrt des Flurförderzeugs. An die dritte Variante schliesst sich also kein Fördermittel wie beispielsweise ein Stetigförderer, insbesondere kein Kettenförderer, an. Die dritte Variante der Übergabestation erlaubt also die Übergabe eines Ladungsträgers von einem ersten Fahrzeug auf ein zweites Fahrzeug, insbesondere von einem Shuttle auf ein Flurförderzeug und umgekehrt. Durch den aktiven Abstell- und Aufnahmeplatz kann dieser in Längsrichtung, d.h. beispielsweise längs einer Förderrichtung des Übergabeförderers, eine solche Längs-Ausdehnung aufweisen, dass er tatsächlich zwei Abstell- und Aufnahmeplätze bildet. In diesem Fall ist es nicht erforderlich, dass das Flurförderzeug und das Shuttle exakt an denselben Abstell- und Aufnahmeplatz fahren, sich also einen einzigen Abstell- und Aufnahmeplatz der betreffenden Station teilen. Stattdessen kann die Übergabestation zwei voneinander beabstandete Abstell- und Aufnahmeplätze umfassen. Hat beispielsweise das Shuttle den Ladungsträger auf "seinem" Abstell- und Aufnahmeplatz abgelegt, welcher beispielsweise Teil eines als Kettenförderer ausgebildeten Übergabeförderers ist, kann dieser Übergabeförderer den Ladungsträger anschliessend zu dem Abstell- und Aufnahmeplatz des Flurförderzeugs transportieren, wobei dieser ebenfalls Teil desselben Übergabeförderers ist. Auf diese Weise bestehen mehr bauliche Freiheiten, weil die Restriktion, dass Shuttle und Flurförderzeug denselben Abstell- und Aufnahmeplatz anfahren müssen, im Gegensatz zur ersten Variante nicht besteht. Unabhängig davon, ob der Übergabeförderer gemäss der dritten Variante einen oder zwei Abstell- und Aufnahmeplätze bildet, kann daran gedacht sein, dass die Übergabestation Zentrier-Anschläge umfasst, wobei der Übergabeförderer den Ladungsträger nach dem Abstellen zwecks Zentrierung gegen diese Zentrier-Anschläge fährt. Dies kann eine effektive Zentrierung bewirken, weil Kettenförderer üblicherweise einen starken Antrieb aufweisen. Stellt der Übergabeförderer separate Abstell- und Aufnahmeplätze für das Shuttle und das Flurförderzeug bereits, so sind die Fahrschienen der ersten Variante vorzugsweise nicht bewegbar. Die vorgenannten Zentrier-Anschläge sind vorzugsweise nahe des zweiten Eingangs montiert. Die dritte Variante kann ebenso wie die ersten Varianten zusätzlich oder alternativ zu den Zentrier-Anschlägen weitere Zentriermittel, insbesondere Zentrier-Schienen umfassen.

Sofern nichts Gegenteiliges angemerkt ist, gelten die nachstehenden Ausführungen gleichermassen für alle drei vorstehend geschilderten Varianten.

Die Zentrier-Schienen können beim Absenken des Ladungsträgers durch das Fahrzeug eine Zentrierung bewirken, wenn ihre lichte Weite nach unten, d.h. in Richtung auf die Fahrschiene zu, abnimmt. Sofern diese Abnahme der lichten Weite gegeben ist, kann an zahlreiche Ausgestaltungen der Zentrier-Schienen gedacht sein. Zentrier-Flächen der Zentrier-Schienen sind zwar vorzugsweise als schräge Ebene ausgestaltet, es muss sich bei der Formgebung aber nicht zwingend um eine Ebene handeln.

Zusätzlich oder alternativ können die Zentrier-Schienen während einer Bewegung des Ladungsträgers in Längsrichtung, d.h. in die Übergabestation hinein, für eine Zentrierung sorgen, wenn ihre lichte Weite entlang dieser Längsrichtung abnimmt. Die vorbeschriebene Bewegung in Längsrichtung, während der die Zentrierung stattfinden kann, kann durch einen sich an die Übergabestation anschliessenden Kettenförderer oder dergleichen gemäss der zweiten Variante der Übergabestation oder durch den Übergabeförderer der Übergabestation gemäss der zweiten oder dritten Variante oder durch das Flurförderzeug gemäss der ersten oder dritten Variante der Übergabestation erfolgen. Die Bewegung des Ladungsträgers in Längsrichtung kann auch durch das Shuttle erfolgen.

Es kann auch an Zentrier-Schienen gedacht sein, deren lichte Weite sowohl nach unten als auch in Längsrichtung abnimmt.

Sind mehrere Abstell- und Aufnahmeplätze vorhanden, so können die Zentrier-Schienen entweder beide Abstell- und Aufnahmeplätze seitlich umfangen. Alternativ kann daran gedacht sein, jedem Abstell- und Aufnahmeplatz Zentrier-Schienen, insbesondere jeweils ein Zentrier-Schienen-Paar zuzuordnen.

Eine Zentrierung umfasst eine Vielzahl an Positionskorrekturen. Unter dem Begriff "Zentrierung" werden im Rahmen der vorliegenden Anmeldung sowohl eine Rotation als auch eine Verschiebung, d.h. Translation des Ladungsträgers verstanden. Eine gemischte Bewegung umfassend Rotation und Translation ist ebenfalls vom Begriff der Zentrierung umfasst.

Bei dem Fördermittel, welches sich gemäss der zweiten Variante an die Übergabestation anschliesst, sowie bei dem Fördermittel, welches den Übergabeförderer der zweiten und dritten Variante bildet, handelt es sich vorzugsweise um ein Stetigfördermittel. Es kann sich um Kettenförderer, Bandförderer, Rollenbahnen, Gliederbandförderer, etc. handeln. Auch Fördermittel mit Seilsträngen und Riemen sind denkbar. Der Übergabeförderer gemäss der zweiten und dritten Variante kann in manchen Ausführungsformen auch durch eine Teleskopgabel gebildet werden, wobei Stetigfördermittel wie Kettenförderer oder dergleichen meist bevorzugt sind.

Vorzugsweise sind der zweite Eingang und das Fördermittel alternativ zueinander.

Bei den Fahrzeugen kann es sich insbesondere um Shuttles und Flurförderzeuge handeln. Das erste Fahrzeug kann ein Shuttle sein; das zweite Fahrzeug kann ein Flurförderzeug sein. Das Flurförderzeug kann beispielsweise in einer Lagervorzone verkehren. Das Shuttle kann vorzugsweise im Regal verkehren.

Bei dem Flurförderzeug kann es sich um ein automatisches Flurförderzeug, beispielsweise um ein fahrerloses Transportsystem handeln. Letztere werden teilweise als FTS abgekürzt, teilweise auch als fahrerlose Transportfahrzeuge (FTF) bezeichnet.

Das erste Fahrzeug kann durch den ersten Eingang in die Übergabestation einfahren, das zweite Fahrzeug kann durch den zweiten Eingang in die Übergabestation einfahren.

Je nachdem, welche Fördermittel im Regal bzw. Lager oder nach dem Auslagern zum Einsatz kommen, kann ein nicht korrekt auf dem Shuttle oder Flurförderzeug positionierter Ladungsträger dazu führen, dass der Ladungsträger von diesem Shuttle oder Flurförderzeug beispielsweise so abgestellt wird, dass eine erneute Aufnahme des Ladungsträgers durch ein anderes Fördermittel, beispielsweise eine Teleskopgabel o.ä., scheitert.

Weiterhin führt oftmals bereits eine geringfügige Fehlpositionierung eines Ladungsträgers auf einem Shuttle zu einem Fehler. Dieser kann entweder, nachdem das Shuttle oder eine zuständige externe Sensorik die Fehlpositionierung erkannt hat, oder nachdem das Shuttle aus der Übergabestation ins Lager einfährt und bedingt durch die Fehlpositionierung seinen Zielort nicht erreicht, zu Problemen führen.

Letztlich sind also zahlreiche Störungen durch nicht korrekt auf dem Shuttle oder auf dem Flurförderzeug positionierte Ladungsträger denkbar, welche einen Eingriff einer Bedienperson und somit eine sinkende Effizienz und einen sinkenden Durchsatz des Lagers bewirken.

Im Allgemeinen können nicht korrekt auf dem Shuttle positionierte Ladungsträger, d.h. nicht zentrierte Ladungsträger, zu Störungen führen, weil sie beispielsweise während der Fahrt im Regal mit Einbauten desselben kollidieren oder daran hängenbleiben und schlimmstenfalls vom Shuttle herunterfallen können. Analoges gilt für nicht korrekt auf dem Flurförderzeug positionierte Ladungsträger, welche beispielsweise in der Vorzone an Hindernissen hängenbleiben können.

Die vorgenannten Fehlpositionierungen und Störungen werden von der Übergabestation gemäss den Ausführungsbeispielen der vorliegenden Erfindung verhindert.

Üblicherweise und im Rahmen der vorliegenden Erfindung bevorzugt sind das Shuttle und das Flurförderzeug mit einer Hub-Einrichtung ausgestattet, welche den Ladungsträger in vertikaler Richtung anheben und absenken können. Die Zentrierung kann erfolgen, indem der von dem Shuttle oder dem Flurförderzeug transportierte Ladungsträger aus einer angehobenen Position abgelassen wird. Falls der Ladungsträger nicht korrekt auf dem Shuttle oder dem Flurförderzeug positioniert war, oder falls das Flurförderzeug beispielsweise wegen der oftmals hohen Positioniertoleranzen nicht in der optimalen Weise in die Übergabestation eingefahren ist, gleitet der Ladungsträger beim Absenken durch die Hub-Einrichtung an dem Zentriermittel entlang und wird dadurch zentriert. Zusätzlich oder alternativ kann die Zentrierung erfolgen, indem das Shuttle oder das Flurförderzeug den Ladungsträger horizontal gegen entsprechende Zentriermittel fährt bzw. drückt.

Die Übergabestation kann als Teil eines Regals, teilweise auch als Lager bezeichnet, ausgebildet sein. Alternativ kann die Übergabestation einem Regal vorgelagert sein.

Als Ladungsträger kommen insbesondere Paletten in Frage. Es kann aber alternativ an Werkstückträger, Behälter, Gitterboxen oder dergleichen gedacht sein.

Shuttles sind Fahrzeuge, welche zumindest horizontal und oftmals ausschliesslich horizontal in einem als Shuttle-System bezeichneten Regalbau verkehren und dort Ladungsträger ein- und auslagern.

Als Eingang wird vorzugsweise derjenige Teil oder Abschnitt der Übergabestation bezeichnet, durch welchen das Shuttle oder das Flurförderzeug in die Übergabestation einfährt.

Die Übergabestation, insbesondere diejenige der ersten und dritten Variante, kann ein Positioniermittel für das Flurförderzeug umfassen. Beispielsweise kann an einfache, paarweise angeordnete und im Wesentlichen parallel verlaufende Positionierhilfen, beispielsweise in Form von seitlichen Führungsschienen, für das Flurförderzeug gedacht sein. Das Positioniermittel kann eine exakte Positionierung des Flurförderzeugs auch dann erlauben, wenn dieses mit einer gewissen Navigations- und Positioniertoleranz behaftet ist. Auf diese Weise werden Fehlpositionierungen des Ladungsträgers vermieden, welche trotz Zentrierung in der Übergabestation auftreten können, wenn das Flurförderzeug bspw. schräg in die Übergabestation einfährt.

Das Zentriermittel kann im Wesentlichen entlang einer Richtung verlaufen, in welcher das zumindest eine Fahrzeug in die Übergabestation ein- oder aus dieser ausfährt, oder entlang welcher das Fördermittel den Ladungsträger in die Übergabestation ein- oder aus der Übergabestation heraus fördert. Hierbei handelt es sich vorzugsweise um eine Längsrichtung. Bei diesem Zentriermittel kann es sich um nachstehend noch näher beschriebene Zentrier-Schienen handeln. Die Zentriermittel müssen nicht streng parallel zu der vorgenannten Richtung verlaufen, sondern können entlang dieser Richtung auch konvergierend angeordnet sein. Da insbesondere Shuttles Ladungsträger wie beispielsweise Paletten oft nur dann transportieren können, wenn diese korrekt auf der Shuttle-Oberseite positioniert wurden, sind konvergierende Zentriermittel meist so angeordnet, dass diese in Richtung auf den ersten Eingang hin konvergieren, über welchen das Shuttle in die Übergabestation einfährt. Die vorbeschriebenen Zentrier-Schienen oder dergleichen sind vorzugsweise fest montiert und relativ beispielsweise zu den Abstell- und Aufnahmeplätzen oder den Fahrschienen nicht beweglich. Es kann aber auch daran gedacht sein, dass die Zentrier-Schienen in Längsrichtung zur Mitte der Übergabestation hin von beiden Seiten her konvergierend angeordnet sind.

Wird im Rahmen der vorliegenden Erfindung auf Zentriermittel, Abstell-Schienen, Fahrschienen und dergleichen im Singular Bezug genommen, so ist das jeweilige Merkmal im Plural stets ebenfalls umfasst. Ist beispielsweise von einer Fahrschiene im Singular die Rede, so kann stets an paarweise angeordnete, parallel verlaufende Fahrschienen gedacht sein.

Das Zentriermittel kann auch orthogonal zu einer Richtung verlaufen, in welcher das zumindest eine Fahrzeug in die Übergabestation ein- oder aus dieser ausführt, oder entlang welcher das Fördermittel den Ladungsträger in die Übergabestation ein- oder aus der Übergabestation heraus fördert. Hierbei kann beispielsweise an Zentrier-Anschläge gedacht sein. Insbesondere kann eine Zentrier-Fläche des Zentriermittels, insbesondere Zentrier-Anschlags, in der vorbeschriebenen Weise orthogonal verlaufen. Unter einer Zentrier-Fläche wird im Rahmen der vorliegenden Erfindung vorzugsweise eine Fläche verstanden, an welcher der Ladungsträger oder ein Abschnitt des Ladungsträgers zwecks Zentrierung entlanggleiten kann. Das vorstehend beschriebene orthogonal zu Ein- und Ausfahr-Richtung verlaufende Zentriermittel ist bei der ersten Variante der Übergabestation vorzugsweise fest eingebaut und beispielsweise relativ zu den Fahrschienen und den Abstell-Schienen nicht beweglich. Für die dritte Variante gilt dasselbe, weil sowohl bei der ersten als auch bei der dritten Variante vorzugsweise das Flurförderzeug in der Lage ist, den Ladungsträger so weit anzuheben, dass er beim Ein- und Ausfahren nicht an den vorbeschriebenen Zentriermitteln hängen bleibt. Die orthogonal verlaufenden Zentriermittel sind hierbei vorzugsweise nahe des zweiten Eingangs montiert, und müssen somit nur von dem Flurförderzeug überwunden werden, wenn dieses einen Ladungsträger in die Übergabestation hinein oder aus dieser heraus transportiert. Bei der zweiten Variante der Übergabestation ist das vorbeschriebene orthogonal verlaufende Zentriermittel entweder nicht vorhanden oder jedenfalls vorzugsweise nicht fest, sondern beweglich eingebaut, weil das sich an die Übergabestation anschliessende Fördermittel, insbesondere Stetigfördermittel, in der Regel den Ladungsträger nicht anheben kann. Denkbar wäre es im Rahmen der zweiten Variante der Übergabestation beispielsweise, die orthogonal verlaufenden Zentriermittel klappbar, schwenkbar, versenkbar oder dergleichen anzuordnen. Der Übergabeförderer könnte den Ladungsträger dann gegen diese orthogonal verlaufenden Zentriermittel fahren, welche anschliessend weggeklappt, weggeschwenkt oder versenkt werden, um den Weitertransport des Ladungsträgers hin zu dem sich an die Übergabestation anschliessenden Fördermittel zu ermöglichen, ohne dass hierfür der Ladungsträger angehoben werden muss.

Die vorbeschriebenen orthogonal zur Einfahrt-Richtung des Shuttles verlaufenden beispielsweise klappbaren, schwenkbaren oder versenkbaren Zentriermittel können auch bei der ersten und der dritten Variante der Übergabestation zum Einsatz kommen.

Bei sämtlichen Varianten der Übergabestation könnte auch daran gedacht sein, die orthogonal verlaufenden Zentriermittel nicht nahe des zweiten Eingangs, sondern nahe des ersten Eingangs anzuordnen. Dies ist möglich, häufig aber weniger vorteilhaft, weil die Hub-Einrichtungen des Shuttles weniger geeignet sind, den Ladungsträger so weit anzuheben, dass die Palette sich oberhalb der orthogonal verlaufenden Zentriermittel befindet und das Shuttle durch den ersten Eingang in die Übergabestation einfahren kann.

Sind orthogonal verlaufende Zentriermittel vorhanden, so ist in sämtlichen Ausführungsbeispielen vorzugsweise daran gedacht, genau zwei Zentrier-Anschläge vorzusehen.

Wie teilweise bereits erwähnt kann insbesondere die erste und die dritte Variante der Übergabestation der Übergabe eines Ladungsträgers von einem Flurförderzeug auf ein Shuttle und umgekehrt dienen, wobei der erste Eingang die Einfahrt des Shuttles erlauben kann, und wobei die Übergabestation gegenüber dem ersten Eingang einen zweiten Eingang umfasst, welcher die Einfahrt des Flurförderzeugs erlauben kann. Hierbei können das Shuttle und das Flurförderzeug den Ladungsträger auf dem Abstell- und Aufnahmeplatz abstellen und von dort aufnehmen. Das zumindest eine Zentriermittel kann derart in der Übergabestation angeordnet sein, dass bei der Übergabe des Ladungsträgers von dem Flurförderzeug an das Shuttle eine Zentrierung erfolgen kann. Optional, aber bevorzugt, kann auch bei der Übergabe des Ladungsträgers von dem Shuttle an das Flurförderzeug eine Zentrierung erfolgen.

Wie teilweise bereits erwähnt kann insbesondere die erste Variante der Übergabestation eine Fahrschiene für das Shuttle umfassen, welche reversibel von einer ersten in eine zweite Position bewegt werden kann. Die Fahrschiene kann in der ersten Position dem Flurförderzeug die Einfahrt in die Übergabestation erlauben und in der zweiten Position dem Shuttle die Einfahrt in die Übergabestation erlauben.

Das reversible Bewegen von der ersten in die zweite Position kann ein Klappen, ein Drehen, ein Schwenken, ein Ein- und Ausfahren oder dergleichen sein. Bevorzugt kann daran gedacht sein, die Fahrschiene zu drehen. Hierfür umfasst die Fahrschiene vorzugsweise eine Drehachse.

In der ersten Position kann die hochgeklappte Fahrschiene dem Flurförderzeug die Einfahrt erlauben, indem sie dessen Einfahrt nicht durch das zweite Flächenelement verhindert, welches von zumindest einem geeigneten Sensor des Flurförderzeugs als Hindernis wahrgenommen wird. Das Flurförderzeug kann auch mehrere derartiger Sensoren umfassen.

In der zweiten Position kann die heruntergeklappte Fahrschiene dem Shuttle die Einfahrt erlauben, welches auf der Fahrschiene in die Übergabestation einfährt.

Eine wie vorstehend beschrieben reversibel bewegbare Fahrschiene kann, insbesondere im Rahmen der ersten Variante der Übergabestation, vorteilhaft sein, wenn sich das Shuttle und das Flurförderzeug von unterschiedlichen Höhenniveaus kommend in die Übergabestation hineinbewegen und/oder wenn eine Höhe von Shuttle und Flurförderzeug unterschiedlich ist.

Beispielsweise kann eine Ebene des Regals, von welcher aus sich das Shuttle durch den ersten Eingang in die Übergabestation begibt, auf einem anderen Höhenniveau, insbesondere höher, angeordnet sein, als eine Lagervorzone, auf welcher sich das Flurförderzeug durch den zweiten Eingang in die Übergabestation begibt.

Derart unterschiedliche Höhenniveaus können auch dann sinnvoll sein, wenn innerhalb der Übergabestation ein Antrieb oder Teile davon und/oder ein Getriebe oder Teile davon angeordnet sind. Die vorgenannten Antriebe, Getriebe oder Teile davon können beispielsweise unterhalb eines Höhenniveaus der Fahrschiene angeordnet sein, so dass das Shuttle diese Antriebe, Getriebe oder Teile davon auf der Fahrschiene fahrend überwinden kann. Gleichzeitig können die Antriebe, Getriebe oder Teile davon so angeordnet sein, dass das Flurförderzeug durch den zweiten Eingang in die Übergabestation einfahren kann. Insbesondere können solche Antriebe, Getriebe oder Teile davon nahe des ersten Eingangs und möglichst weit vom zweiten Eingang entfernt angeordnet sein.

Die Übergabestation kann ein mechanisch mit der Fahrschiene gekoppeltes erstes Flächenelement umfassen, welches eingerichtet ist, in der ersten Position von einem Sensor des Shuttles als Hindernis erkannt zu werden. Das Shuttle kann auch mehrere derartiger Sensoren umfassen. Das erste Flächenelement kommt insbesondere bei einer Übergabestation gemäss der ersten Variante zum Einsatz.

Aus Sicht des Shuttles handelt es sich bei dem ersten Flächenelement somit um ein bewegliches Hindernis. Unabhängig von etwaigen Befehlen einer Steuerungseinrichtung erkennen die Bordmittel des Shuttles, insbesondere ein Kollisionssensor, das erste Flächenelement als Hindernis. Befindet sich die Übergabestation in der ersten Position, so fährt das Shuttle daher auch dann nicht in die Übergabestation ein, wenn es von der Steuerungseinrichtung fehlerbedingt einen solchen Befehl erhält. Das erste Flächenelement verhindert somit, dass das Shuttle bei hochgeklappten Fahrschienen in die Übergabestation einfährt, was zu Beschädigungen am Shuttle und der Übergabestation führen würde.

Die Flächenelemente stellen somit sicher, dass im Fehlerfall kein Schaden entsteht.

Die Kopplung zwischen dem ersten Flächenelement und der Fahrschiene kann über ein Getriebe, beispielsweise über ein Koppelgetriebe oder dergleichen, erfolgen. Im Rahmen der vorliegenden Erfindung kann aber auch daran gedacht sein, das erste Flächenelement starr oder beweglich unmittelbar mit der Fahrschiene zu verbinden, was auch vom Begriff der Kopplung umfasst sein soll. Jede Bauweise, welche bewirkt, dass sich das erste Flächenelement in Reaktion auf eine Bewegung der Fahrschiene ebenfalls bewegt, kann als "Kopplung" im Rahmen der vorliegenden Erfindung aufgefasst werden.

Eine starre Verbindung zwischen dem Flächenelement und der Fahrschiene kann beispielsweise vorliegen, wenn das Flächenelement als Fahne ausgeführt ist, welche derart mit der Fahrschiene verbunden ist, so dass sie weder eine Rotation noch eine Translation relativ zur Fahrschiene durchführen kann. Eine solche Fahne folgt unmittelbar jeder Bewegung der Fahrschiene.

Eine bewegliche Verbindung zwischen dem Flächenelement und der Fahrschiene kann beispielsweise vorliegen, wenn das Flächenelement als Fahne ausgeführt ist, welche über eine Schraube, einen Bolzen oder dergleichen mit der Fahrschiene verbunden ist, so dass sie zwar eine Rotation aber keine Translation relativ zur Fahrschiene durchführen kann.

Es kann an eine direkte oder an eine indirekte Kopplung zwischen der Fahrschiene und dem ersten Flächenelement gedacht sein. Im Falle einer indirekten Kopplung kann beispielsweise daran gedacht sein, dass ein die Fahrschiene bewegendes Getriebe auch mit dem ersten Flächenelement gekoppelt ist, und eine Bewegung dieses Getriebes stets sowohl die Fahrschiene als auch das erste Flächenelement bewegt.

Die Übergabestation kann ein mechanisch mit der Fahrschiene gekoppeltes zweites Flächenelement umfassen, welches eingerichtet ist, in der zweiten Position von einem Sensor des Flurförderzeugs als Hindernis erkannt zu werden. Hinsichtlich der Kopplung gelten die oben zum ersten Flächenelement gemachten Aussagen auch für das zweite Flächenelement. Das zweite Flächenelement kommt insbesondere bei einer Übergabestation gemäss der ersten Variante zum Einsatz.

Eine Bewegung beider Flächenelemente ist mechanisch mit der Bewegung der Fahrschiene gekoppelt. Die als bewegliche Hindernisse und somit letztlich als Auslöser eines Stopp-Signals auf das Shuttle und das Flurförderzeug wirkenden Flächenelemente führen Ihre Funktion somit völlig unabhängig von etwaigen Befehlen der Steuerungseinrichtung aus. Fehler in der Steuerungseinrichtung haben somit keinerlei Auswirkung auf die Funktionstüchtigkeit der Flächenelemente.

Die Übergabestation kann nur das erste gekoppelte Flächenelement, nur das zweite gekoppelte Flächenelement, oder beide gekoppelten Flächenelemente umfassen.

Umfasst die Übergabestation das erste und das zweite gekoppelte Flächenelement, so kann es sich hierbei um separate Bauteile handeln. Es kann aber auch daran gedacht sein, dass die beiden Flächenelemente Abschnitte desselben Bauteils sind.

Bei den Sensoren des Shuttles und/oder des Flurförderzeugs, welche die Flächenelemente erkennen, kann es sich insbesondere um jeweils einen oder mehrere Kollisionssensoren handeln, welche als Bordmittel in Shuttles und Flurförderzeugen häufig eingesetzt werden.

Die gekoppelten Flächenelemente erlauben es auf einfache und robuste Weise, beispielsweise in der zweiten Position eine Einfahrt des Flurförderzeugs zu verhindern und in der ersten Position ein Einfahren des Shuttles zu verhindern.

Die Übergabestation kann einen Sensor umfassen, welcher eingerichtet ist, eine Anwesenheit des Shuttles und/oder eine Anwesenheit des Flurförderzeugs in der Übergabestation zu erkennen. Die Übergabestation kann hierfür einen oder mehrere geeignete Sensoren umfassen.

Es kann auch daran gedacht sein, dass die Übergabestation einen einzigen Sensor umfasst, welcher eingerichtet ist, sowohl eine Anwesenheit des Shuttles als auch eine Anwesenheit des Flurförderzeugs in der Übergabestation zu erkennen. Weitere Sensoren, welche anderen Zwecken dienen, können zusätzlich vorhanden sein.

Die vorliegende Erfindung umfasst weiterhin ein Regal umfassend eine Übergabestation wie vorstehend beschrieben, wobei die Übergabestation als Schnittstelle zwischen dem Regal und einem dem Regal vorgelagerten Bereich, beispielsweise einer Lagervorzone, ausgebildet ist.

Die vorliegende Erfindung umfasst ferner ein Shuttle-System umfassend ein Regal wie vorstehend beschrieben sowie zumindest ein Fahrzeug, insbesondere ein Shuttle und gegebenenfalls ein Flurförderzeug.

Das Shuttle-System kann als Ebenen-gebundenes System ausgebildet sein und eine oder vorzugsweise mehrere Ebenen umfassen. Optional können Gassen vorhanden sein. Hierbei sind vorzugsweise jeweils zumindest zwei Shuttles pro Ebene vorhanden. Diese Shuttles können sich vorzugsweise entlang der Hauptfahrwege und quer zu diesen Hauptfahrwegen, d.h. beliebig innerhalb der Ebenen bewegen. Ein solches System kann Lifte für das Fördergut umfassen, insbesondere, wenn mehrere Ebenen vorhanden sind.

Das Shuttle-System kann alternativ als Gassen-gebundenes System ausgebildet sein und eine oder vorzugsweise mehrere Ebenen sowie eine oder vorzugsweise mehrere Gassen umfassen. Die Shuttles können sich in einem solchen System innerhalb der Gassen horizontal und vertikal bewegen, die Gassen jedoch nicht wechseln. Eine horizontale Bewegung der Shuttles ist somit auf die jeweils zugehörige Gasse beschränkt. Ein solches System kann Lifte für die Shuttles umfassen, um den Shuttles einen Ebenen-Wechsel zu ermöglichen.

Bei dem Ebenen-gebundenen System und bei dem Gassen-gebundenen System haben die Shuttles vorzugsweise zwei Freiheitsgrade der Bewegung. Das Shuttle-System kann auch als Gassen- und Ebenen-gebundenes Shuttle-System ausgebildet sein.

Ferner kann das Shuttle-System als ungebundenes Shuttle-System ausgebildet sein und eine oder vorzugsweise mehrere Ebenen umfassen. Optional können Gassen vorhanden sein. In einem solchen System können Lifte für die Shuttles vorhanden sein, welche diesen eine Bewegung in vertikaler Richtung ermöglichen. Durch Fahrwege quer zu den Hauptfahrwegen oder quer zu etwaigen Gassen haben die Shuttles in einem ungebundenen System drei Freiheitsgrade der Bewegung. Ungebundene Systeme ermöglichen eine hohe Flexibilität. Der Durchsatz ungebundener Shuttle-Systeme kann durch Einschleusen weiterer Shuttles erhöht werden.

Das Shuttle-System kann eine Lichtschranke umfassen, welche eingerichtet ist, ein sich der Übergabestation näherndes Flurförderzeug und eine sich der Übergabestation nähernde Person zu erfassen und zwischen beiden zu unterscheiden. Vorzugsweise sind mehrere solcher Lichtschranken vorhanden, welche sämtliche Übergabestationen absichern. Hierbei kann es sich um Reflexions-Lichtschranken, Lichtgitter oder Einweg-Lichtschranken handeln.

Vorzugsweise kann die Lichtschranke nicht nur zwischen einem Flurförderzeug und einer sich nähernden Person unterscheiden, sondern umfasst zusätzlich eine sogenannte Muting-Funktion. Hierbei wird die üblicherweise bei der Unterbrechung des Lichtstrahls ausgelöste Aktion, meist ein Stoppen oder Stilllegen einer bestimmten Einrichtung oder eines bestimmten Bereichs, genau dann nicht durchgeführt, wenn durch zumindest eine zusätzliche Muting-Lichtschranke erkannt wird, dass es sich bei dem die Unterbrechung auslösenden Gegenstand nicht um eine Person, sondern vorliegende insbesondere um ein Flurförderzeug handelt. Ein solches Muting ist also ein vorübergehendes und automatisches Stummschalten der zugehörigen Lichtschranke.

Eine Lichtschranke mit Muting-Funktion ist im Rahmen der vorliegenden Erfindung sehr vorteilhaft, weil zwar Flurförderzeuge, insbesondere FTS, üblicherweise mit Kollisionssensoren ausgestattet sind und Personenschäden effizient vermeiden können, Shuttles aber häufig in einem für den Personenverkehr unzugänglichen Bereich arbeiten, und solche Sensoren oft nicht besitzen oder zumindest nicht eingerichtet sind, Personenschäden mit ausreichender Sicherheit auszuschliessen. Da die erfindungsgemässe Übergabestation den Zugang durch Personen erlauben kann, welche an der Übergabestation gegen Verletzungen durch das Shuttle abgesichert werden müssen, erhöht die vorbeschriebene Lichtschranke die Sicherheit.

Wie vorstehend bereits teilweise erwähnt, kann die Übergabestation, insbesondere die dritte Variante, einen ersten Abstell- und Aufnahmeplatz für den Ladungsträger umfassen, an welchem das Shuttle den Ladungsträger abstelle und aufnehmen kann. Ferner kann die Übergabestation einen zweiten Abstell- und Aufnahmeplatz für den Ladungsträger umfassen, an welchem das Flurförderzeug den Ladungsträger abstellen und aufnehmen kann. Die Übergabestation kann ferner ein Fördermittel, hier als Übergabeförderer bezeichnet, umfassen, welches eingerichtet ist, den Ladungsträger zwischen dem ersten Abstell- und Aufnahmeplatz und dem zweiten Abstell- und Aufnahmeplatz zu bewegen.

Die Zentrier-Mittel können hinsichtlich ihrer Ausdehnung und ihrem Winkel zur Horizontalen, insbesondere also hinsichtlich eines Winkels zwischen der Zentrier-Fläche und der Horizontalen, von einer Hubhöhe, insbesondere von einer maximalen Hub-Höhe eines oder beider Fahrzeuge abhängig sein.

In sämtlichen Varianten sind die Zentriermittel vorzugsweise passive Zentriermittel in dem Sinne, dass die Zentrierung erfolgt, indem der zu zentrierende Ladungsträger an einer Fläche des Zentriermittels entlang-gleitet oder an diese anstösst, wodurch die Zentrierung bewirkt wird. Der Ladungsträger wird hierbei beispielsweise durch eine Hub-Einrichtung eines Fahrzeugs abgesenkt oder durch einen Kettenförderer horizontal gegen das Zentriermittel gefahren. Auch klappbare, schwenkbare oder versenkbare Zentriermittel sind im vorbeschriebenen Sinne passiv, weil sie sich während dem Zentrier-Vorgang nicht bewegen. Es kann jedoch bei sämtlichen Varianten daran gedacht sein, aktive Zentriermittel einzusetzen. Beispielsweise können seitlich neben den Abstell- und Übergabeplätzen angebrachte Stempel oder dergleichen, welche orthogonal zur Längsrichtung bewegbar sind, den Ladungsträger zentrieren. Diese aktive Zentrierung kann sowohl erfolgen, während der Ladungsträger sich auf einem in der Übergabestation befindlichen Fahrzeug oder Fördermittel befindet, als auch, wenn er auf dem Abstell- und Übergabeplatz abgestellt wurde. Es kann auch an aktive Zentriermittel gedacht sein, welche den Ladungsträger zwecks Zentrierung anheben. Zahlreiche Variationen aktiver Zentriermittel sind denkbar. Dennoch kommen bevorzugt passive Zentriermittel zum Einsatz.

Die Übergabestation kann eine, vorzugsweise genau eine Lichtschranke umfassen. Der Lichtstrahl dieser Lichtschranke kann derart diagonal innerhalb der Übergabestation verlaufen, dass die Lichtschranke sowohl die Anwesenheit eines Shuttles als auch eines Flurförderzeugs in der Übergabestation erfassen kann. Diese Lichtschranke kann insbesondere bei der ersten Variante der Übergabestation zum Einsatz kommen. Diese Lichtschranke ist vorzugsweise so eingerichtet, dass sie zwar die Anwesenheit sowohl eines Shuttles als auch eines Flurförderzeugs erfassen kann, nicht jedoch die Anwesenheit einer Palette. Somit erfasst die Lichtschranke lediglich, ob die Übergabestation von einem Fahrzeug belegt ist. Bei dieser Lichtschranke handelt es sich nicht um die weiter oben beschriebene optionale Lichtschranke des Shuttle-Systems, welche eingerichtet ist, ein sich der Übergabestation näherndes Flurförderzeug zu erkennen, sondern um eine Lichtschranke, welche nur Fahrzeuge innerhalb der Übergabestation erfasst.

Die vorliegende Erfindung umfasst weiterhin ein nachstehend beschriebenes Verfahren zur Übergabe eines Ladungsträgers in einer Übergabestation. Verfahrensschritte, welche vorstehend in Bezug auf die Übergabestation und das Shuttle-System beschrieben sind, können im Rahmen der nachstehend beschriebenen Verfahren ebenfalls zum Einsatz kommen und umgekehrt.

Das Verfahren umfasst folgende Schritte:
- Ein Fördermittel oder ein Fahrzeug stellt einen Ladungsträger auf einem Abstell- und Aufnahmeplatz der Übergabestation ab,
- Der Ladungsträger wird zentriert,
- Das Fördermittel oder das Fahrzeug nimmt den Ladungsträger von dem Abstell- und Aufnahmeplatz der Übergabestation auf.

Gemäss dem vorstehenden Verfahren kann weiterhin daran gedacht sein, die nachfolgend aufgelisteten Verfahrensschritte durchzuführen. Vorzugsweise kommen die nachfolgend beschriebenen Verfahrensschritte bei Verwendung einer Übergabestation nach der ersten und gegebenenfalls nach der dritten Variante zum Einsatz.
- Ein mit einem Ladungsträger beladenes Shuttle oder Flurförderzeug fährt durch den ersten oder den zweiten Eingang in die Übergabestation ein
- Das Shuttle oder Flurförderzeug senkt den Ladungsträger ab, welcher nötigenfalls durch ein Entlanggleiten an Zentriermitteln zentriert wird
- Das Shuttle oder Flurförderzeug verlässt die Übergabestation durch den ersten oder zweiten Eingang
- Das Flurförderzeug oder Shuttle fährt durch den gegenüberliegenden zweiten oder ersten Eingang in die Übergabestation ein und nimmt den zuvor dort abgestellten Ladungsträger auf.

Das Entlanggleiten an den Zentriermitteln erfolgt üblicherweise dann, wenn der Ladungsträger nicht zentriert auf dem Shuttle oder Flurförderzeug abgestellt wurde.

Sowohl das Shuttle als auch das Flurförderzeug umfassen vorzugsweise eine Hub-Einrichtung, mit der der aufgeladene Ladungsträger abgesenkt und angehoben werden kann. Vor dem Einfahren in die Übergabestation wird der Ladungsträger vorzugsweise soweit angehoben, dass eine Kollision oder Berührung mit den Zentriermitteln oder anderen Komponenten der Übergabestation ausgeschlossen ist. Beim Absenken innerhalb der Station erfolgt dann die Zentrierung. Das nach dem Abstellen des Ladungsträgers in die Übergabestation einfahrende Fahrzeug, also das Flurförderzeug oder das Shuttle, fährt vorzugsweise mit abgesenkter Hub-Einrichtung in die Übergabestation ein und nehmen den Ladungsträger durch Anheben der Hub-Einrichtung auf, sobald es sich in einer vorbestimmten Position unterhalb des Ladungsträgers befindet.

Die vorliegende Erfindung umfasst weiterhin ein Verfahren zur Übergabe eines Ladungsträgers in einer Übergabestation mit einem Übergabe-Förderer mit folgenden Verfahrensschritten:
- Ein Ladungsträger wird von einem Shuttle oder von einem Fördermittel auf dem Übergabe-Förderer der Übergabestation abgestellt,
- Der Ladungsträger wird zentriert,
- Das Fördermittel oder das Shuttle nimmt den Ladungsträger von dem Übergabe-Förderer der Übergabestation auf.

Die vorliegende Erfindung umfasst weiterhin ein Verfahren zum Betreiben eines Shuttle-Systems, wobei das Shuttle und das Flurförderzeug direkt oder indirekt über eine Steuerungseinrichtung mit der Übergabestation kommunizieren, um eine Bewegung der Fahrschiene von der ersten in die zweite oder von der zweiten in die erste Position zu bewirken. Dieses Verfahren zum Betreiben eines Shuttle-Systems kommt vorzugsweise im Rahmen des Verfahrens zur Übergabe eines Ladungsträgers zum Einsatz, wobei vorzugsweise eine Übergabestation gemäss der ersten Variante zum Einsatz kommt.

Im Rahmen des vorgenannten Verfahrens zum Betreiben eines Shuttle-Systems kann daran gedacht sein, dass die Fahrzeuge, d.h. insbesondere Shuttle und Flurförderzeug, drahtlos mit der Übergabestation kommunizieren, um beispielsweise einen Befehl oder eine Anfrage für die Bewegung der Fahrschiene zu stellen bzw. eine solche Bewegung anzufordern.

Die Kommunikation kann zentral oder dezentral erfolgen. Beispielsweise kann jede Übergabestation eine Steuerungseinrichtung aufweisen, oder mehrere Stationen teilen sich eine solche Steuerungseinrichtung, welche auch in die Kommunikation eingebunden ist.

Es kann auch daran gedacht sein, die Kommunikation drahtgebunden stattfinden zu lassen, oder über Lichtschranken oder dergleichen.

Im Falle einer direkten Kommunikation zwischen dem Shuttle und dem Flurförderzeug mit der Übergabestation kann beispielsweise ein sich der Übergabestation näherndes Shuttle kurz vor der Ankunft bewirken, dass die Übergabestation in die erste Position übergeht, um dem Shuttle die Einfahrt zu erlauben, sofern sich momentan kein Flurförderzeug in der Übergabestation befindet. Dies kann mit Hilfe der Lichtschranke festgestellt werden. Die direkte Kommunikation erfolgt ohne Einbindung der Steuerungseinrichtung.

Bei der indirekten Kommunikation kann das sich der Übergabestation nähernde Shuttle mit der Steuerungseinrichtung kommunizieren, um den Übergang in die erste Position zu bewirken.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 ein erstes Ausführungsbeispiel einer Übergabestation 1 in einer ersten Position;
Figur 2 die Übergabestation 1 nach Figur 1 in einer zweiten Position;
Figur 3 eine weitere Ansicht der Übergabestation 1 nach Figur 1 mit Palette 15;
Figur 4 einen Schnitt durch eine Abstell-Schiene 4 gemäss Figur 2 parallel zur x-y-Ebene;
Figur 5 eine Vorderansicht der Übergabestation 1 mit einem darin befindlichem Flurförderzeug 20 und einer Palette 15 innerhalb eines Regalbaus 24;
Figur 6 die Ansicht nach Figur 5, aber mit einem Shuttle 19 in der Übergabestation 1 sowie in
Figur 7 eine Variante einer Übergabestation 1 mit einem Übergabe-Förderer 21.

Die Figuren 8 bis 20 sind stark vereinfachte schematische Ansichten, welche einzelne Aspekte von Ausführungsformen der vorliegenden Erfindung zeigen.

Der besseren Übersicht halber sind nicht sämtliche Merkmale in sämtlichen Figuren mit Bezugsziffern versehen.

### Ausführungsbeispiel

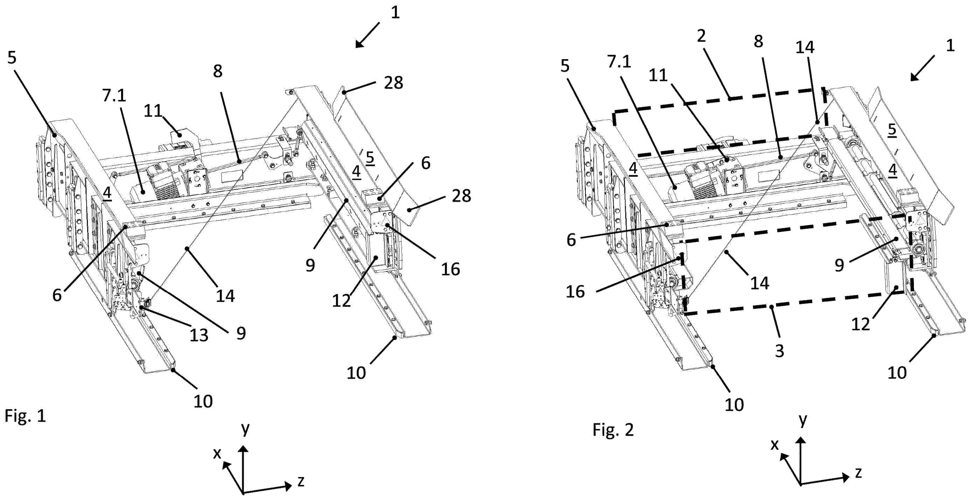

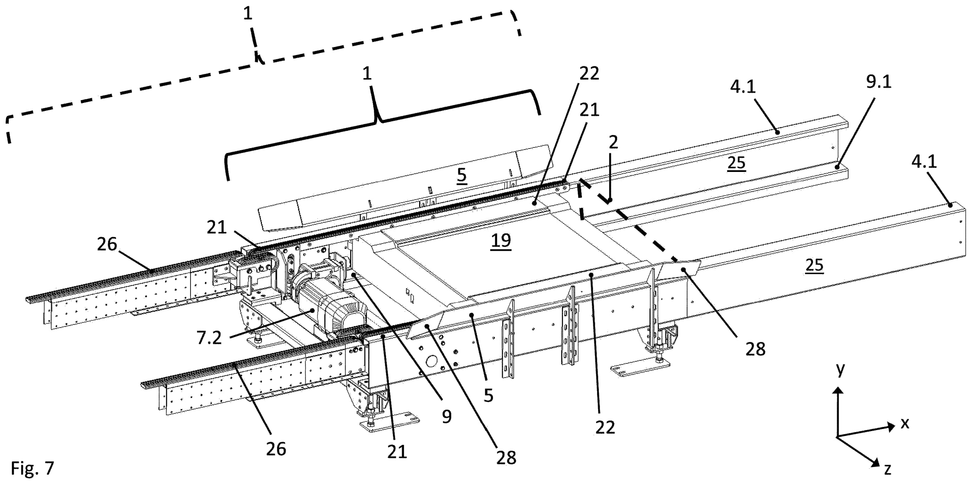

Die Figuren 1 bis 6 zeigen ein erstes Ausführungsbeispiel einer Übergabestation 1, die Figur 7 zeigt ein zweites Ausführungsbeispiel einer Übergabestation 1.

Die in den Figuren 1 und 2 gezeigte Übergabestation 1 umfasst ein Paar Abstell-Schienen 4 zur Aufnahme einer Palette 15, ein Paar Zentrier-Schienen 5, ein Paar Zentrier-Anschläge 6 auf den Abstell-Schienen 4, ein Paar Zentrierhilfen 10, einen Motor 7.1 sowie ein Koppelgetriebe 8 und ein Paar Fahrschienen 9. Ferner sind ein erstes Flächenelement 11 sowie ein zweites Flächenelement 12 erkennbar. In Figur 2 sind weiterhin Bereiche der Übergabestation 1 markiert, welche als erster Eingang 2 bzw. zweiter Eingang 3 fungieren. Weiterhin sind eine Lichtschranke 13 und ein zugehöriger Lichtstrahl 14 dargestellt. Der Lichtstrahl 14 verläuft diagonal und erlaubt es somit, sowohl ein Shuttle 19 als auch ein Flurförderzeug 20 in der Übergabestation 1 zu erfassen. Die Anwesenheit einer Palette 15 wird jedoch nicht erfasst. In Figur 1 sind ferner abgewinkelte Abschnitte 28 der Zentrier-Schienen 5 erkennbar und eine Drehachse 29 der Fahrschiene 9 erkennbar.

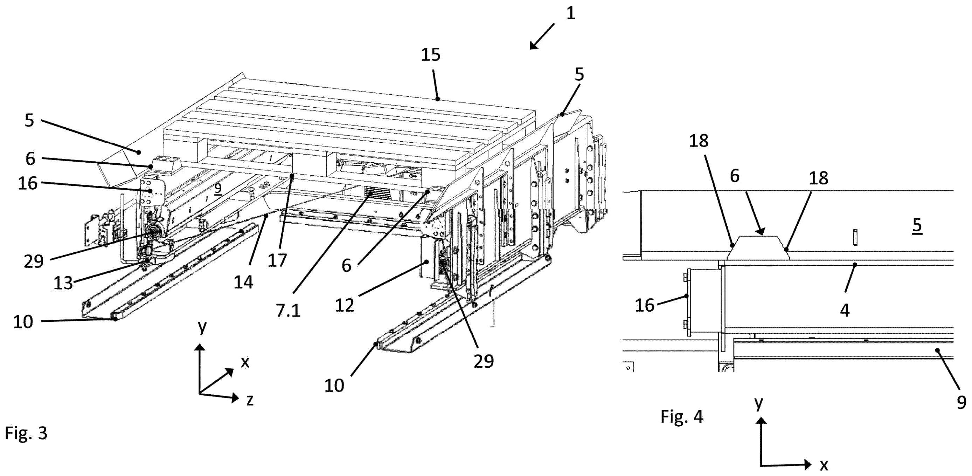

In Figur 3 ist ferner eine Unterkante 17 der Palette 15 erkennbar.

In Figur 4 sind die heruntergeklappte Fahrschiene 9 sowie eine Zentrier-Fläche 18 des Zentrier-Anschlags 6 erkennbar.

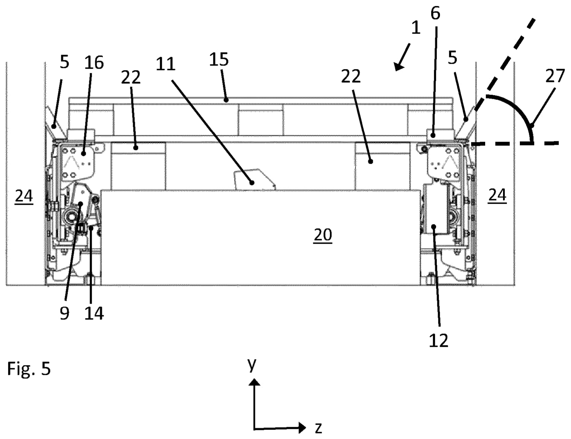

In Figur 5 befindet sich die Übergabestation 1 in der ersten Position, die Fahrschienen 9 sind hochgeklappt. Das Flurförderzeug 20 befindet sich in der Übergabestation 1. Zwei ausgefahrene Hub-Einrichtungen 22 des Flurförderzeugs 20 sind erkennbar. Ferner ist in Figur 5 ein Winkel 27 zwischen der Zentrier-Schiene 5 und der z-Achse bzw. der Horizontalen, jeweils verdeutlicht bzw. verlängert durch gestrichelte Linien, erkennbar.

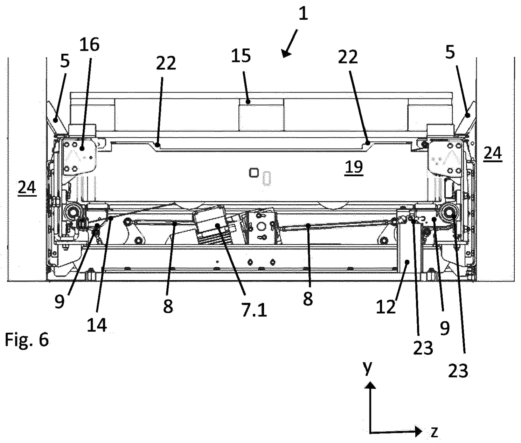

In Figur 6 befindet sich die Übergabestation 1 in der zweiten Position, die Fahrschienen 9 sind heruntergeklappt. Das Shuttle 19 befindet sich in der Übergabestation 1. Ferner ist ein Befestigungselement 23 erkennbar, mit welchem das zweite Flächenelement 12 an der Fahrschiene 9 befestigt ist.

In den Figuren 5 und 6 ist jeweils beidseits ein Herausfall-Schutz 16 erkennbar.

In den Figuren 5 und 6 ist erkennbar, dass eine in z-Richtung gemessene lichte Weite zwischen den Zentrier-Schienen 5 nach unten, d.h. in negativer y-Richtung abnimmt. In Figur 1, ebenso wie in der nachfolgend näher diskutierten Figur 7, ist ferner erkennbar, dass die in z-Richtung gemessene lichte Weite zwischen den Zentrier-Schienen durch die abgewinkelten Abschnitte 28 auch in positiver und negativer Richtung beim Einfahren der Palette 15 von beiden Seiten der Übergabestation 1 abnimmt.

Die Zentrier-Anschläge 6 mit den orthogonal zu der Längs-Richtung der Zentrier-Schienen 5 verlaufenden Zentrier-Flächen 18 sind nahe des zweiten Eingangs 3 montiert.

In Figur 7 sind neben der Übergabestation 1 sich anschliessende Kettenförderer 26 sowie Kanalschienen 25 erkennbar, wobei jeweils nur ein kleiner Abschnitt der Kettenförderer 26 und Kanalschienen 25 dargestellt ist. Die Kanalschienen 25 umfassen Fahrschienen 9.1 und Abstell-Schienen 4.1, welche sich fluchtend an die Fahrschienen 9 sowie die Übergabe-Förderer 21 der Übergabestation 1 anschliessen. Die Kettenförderer 26 schliessen sich ebenfalls fluchtend an die Übergabe-Förderer 21 der Übergabestation 1 an. Weiterhin ist ein Motor 7.2 erkennbar, welcher den Übergabe-Förderer 21 antreibt. In Figur 1 sind ferner abgewinkelte Abschnitte 28 der Zentrier-Schienen 5 erkennbar.

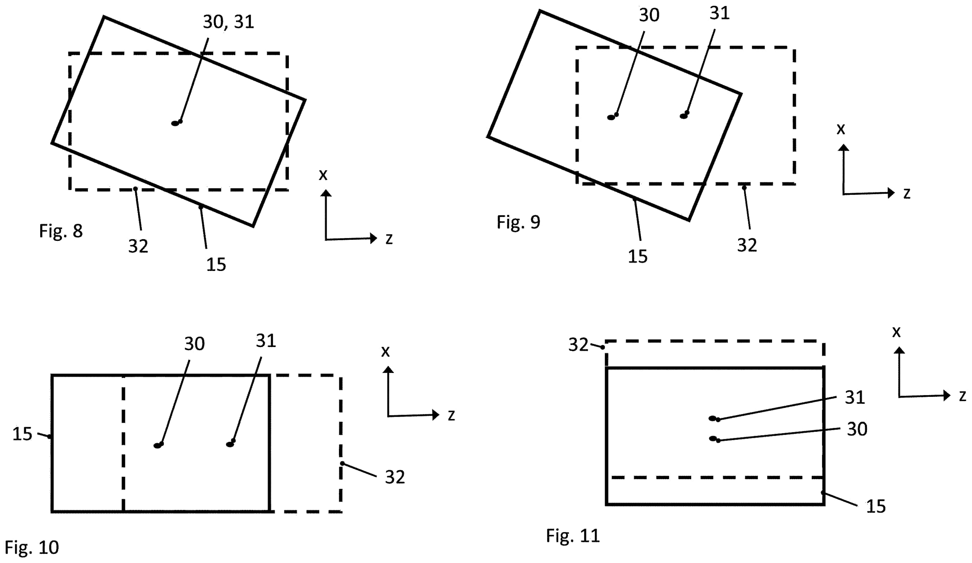

In den Figuren 8 bis 11 sind schematisch einige mögliche fehlerhafte Positionen der Palette 15 im Vergleich zur gewünschten Position 32 dargestellt. Unter der "gewünschten Position 32" wird hierbei beispielhaft die gewünschte Position auf dem Flurförderzeug 20 oder dem Kettenförderer 26 verstanden. verstanden.

Die Figuren 8 bis 11 sollen nur schematisch verdeutlichen, wie eine Verschiebung und/oder eine Rotation der Palette 15 im Vergleich zur ihrer gewünschten Position 32 korrigierbar ist.

In Figur 8 fallen ein Mittelpunkt 30 der Palette 15 und ein Mittelpunkt 31 der gewünschten Position 32 zusammen. Die Fehlpositionierung der Palette 15 in Figur 8 besteht also ausschliesslich in einer Drehung (hier im Uhrzeigersinn) im Vergleich zur gewünschten Position 32.

In Figur 9 besteht die Fehlpositionierung der Palette 15 in der in Figur 8 bereits gezeigten Drehung und einer zusätzlichen Verschiebung in negativer z-Richtung (Quer-Richtung), d.h. nach links in Figur 9.

In Figur 10 besteht die Fehlpositionierung der Palette 15 ausschliesslich in einer Verschiebung in negativer z-Richtung, d.h. nach links in Figur 10.

In Figur 11 besteht die Fehlpositionierung der Palette 15 ausschliesslich in einer Verschiebung in Längsrichtung x, d.h. in Figur 11 nach oben.

Üblicherweise verläuft eine Wirkrichtung einer Schwerkraft in negativer vertikaler Richtung y, eine Horizontalebene ist vorzugsweise die x-z-Ebene.

Oberflächen von Fahrschienen 9, Abstell-Schienen 4 und Übergabe-Förderern 21 verlaufen vorzugsweise parallel zur Horizontalebene.

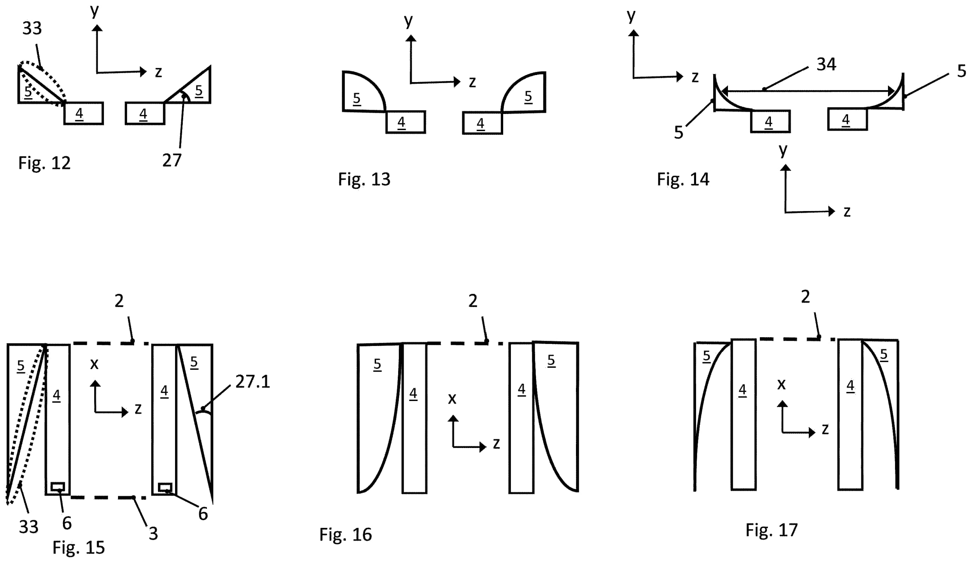

Figur 12 zeigt in einer sehr schematischen Ansicht ähnlich derjenigen gemäss den Figuren 5 und 6 die Abstell-Schienen 4 und die Zentrier-Schienen 5. Die Figuren 13 bis 20 zeigen denkbare Varianten.

In der Ausführungsform nach Figur 12 sind die Abschnitte 13 der Zentrier-Schienen 5 im Querschnitt, d.h. in der y-z-Ebene, als Strecken ausgebildet.

Wie in Figur 12 auf der rechten Seite angedeutet, ist der im Querschnitt als Strecke ausgebildete Abschnitt 33 zur Querrichtung z, d.h. zu einer Horizontalen, in einem Winkel 27 geneigt.

Die den Abschnitten 33 in Figur 12 entsprechenden Abschnitte der Zentrier-Schienen 5 in den Figuren 13 und 14 sind als Kreisbögen ausgebildet. Diese kreisbogenförmigen Abschnitte sind der Übersicht halber nicht mit der Bezugsziffer 33 versehen.

In Figur 15 sind die Abschnitte 33 der Zentrier-Schienen 5 auch im Längsschnitt, d.h. in der x-z-Ebene, als Strecken ausgebildet. Die Zentrier-Schienen 5 konvergieren also in x-Richtung zum ersten Eingang 2 hin. Wird von einer Längsrichtung der Übergabestation 1 gesprochen, so ist vorzugsweise die Richtung parallel zur x-Achse gemeint. Wird von einer orthogonal zur Längsrichtung verlaufenden Richtung, teilweise auch kurz von einer orthogonalen Richtung gesprochen, so ist vorzugsweise die Richtung parallel zur z-Achse gemeint.

Die den Abschnitten 33 in Figur 15 entsprechenden (dort nicht mit Bezugsziffern versehenen) Abschnitte der Zentrier-Schienen 5 in den Figuren 16 und 17 sind als Äste einer Parabel ausgebildet.

Die (dort nicht mit Bezugsziffern versehenen) Abschnitte der Zentrier-Schienen 5, welche mit der Palette 15 in Kontakt treten können, sind in den Figuren 13 und 16 konvex, in den Figuren 14 und 17 konkav ausgebildet.

Aus den Figuren 5 und 6 geht hervor, dass eine in einer Querrichtung, d.h. entlang der z-Achse, gemessene lichte Weite 34 zwischen den Zentrier-Schienen 5 sowohl in Längsrichtung x als auch in negativer vertikaler Richtung y abnehmen kann. Eine in Figur 12 erkennbare Abnahme der lichten Weite 34 in negativer y-Richtung kommt vorzugsweise bei Übergabestationen 1 gemäss der vorliegenden Erfindung zum Tragen. Die Varianten gemäss den Figuren 13 ff. sind optional.

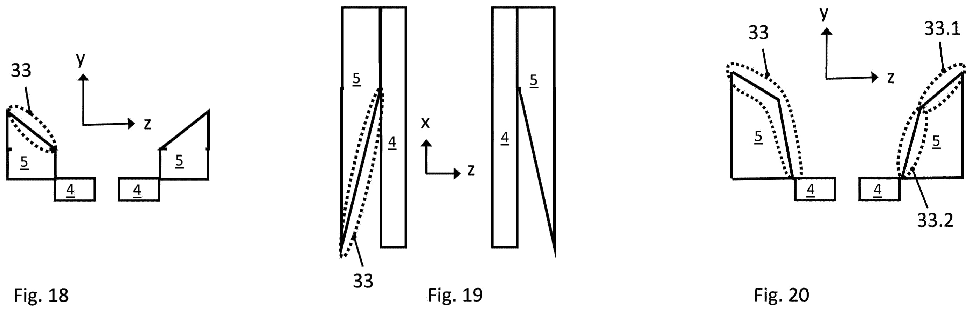

In Figur 18 ist exemplarisch gezeigt, dass in negativer vertikaler Richtung y (d.h. nach unten) konvergierende Abschnitte 33, welche der Positionskorrektur dienen, sich im Querschnitt nicht über die gesamte vertikale Richtung y erstrecken müssen. Die Zentrier-Schienen 5 können auch Abschnitte umfassen, welche parallel zur vertikalen Richtung y verlaufen. In diesen parallel zur vertikalen Richtung y verlaufenden Abschnitten bleibt die lichte Weite 34 konstant.

In Figur 19 ist exemplarisch gezeigt, dass in Längsrichtung x konvergierende Abschnitte 33, welche der Positionskorrektur dienen, sich im Längsschnitt nicht über die gesamte Längsrichtung x erstrecken müssen. Die Zentrier-Schienen 5 können auch Abschnitte umfassen, welche parallel zur Längsrichtung x verlaufen, und in denen die lichte Weite 34 konstant bleibt. Der Abschnitt 33 in Figur 19 ist ausgebildet wie der beispielsweise in Figur 1 erkennbare abgewinkelte Abschnitt 28 der Zentrier-Schiene 5.

In Figur 20 ist exemplarisch gezeigt, dass Abschnitte 3, welche der Positionskorrektur dienen, sich im Querschnitt auch als Hintereinanderreihung mehrerer Formen, hier konkret zweier Strecken, darstellen können. Die lichte Weite 34 zwischen den Zentrier-Schienen 5 nimmt in negativer y-Richtung zwar kontinuierlich ab. Da ein erster Teilabschnitt 33.1 einen kleineren Neigungswinkel zur Quer-Richtung z (d.h. zur Horizontalen) aufweist als ein 10 zweiter Teilabschnitt 33.2, ist der Grad dieser Abnahme der lichten Weite im Bereich des ersten Teilabschnitts 33.1 stärker als im Bereich des zweiten Teilabschnitts 33.2.

Der in Figur 12 gezeigte Winkel 27 kann zwischen 45° und 85° liegen. Er kann von einem maximalen Hub der Hub-Einrichtungen 22 abhängig sein.

Der in Figur 15 gezeigte Winkel 27.1 kann zwischen 0,1° und 10° liegen.

Bezugnehmend auf die Figuren 1 bis 20 erklärt sich die Funktionsweise der erfindungsgemässen Vorrichtung folgendermassen:
Die Übergabestation 1 ist als Schnittstelle zwischen einem Regalbau 24 und einer (nicht gezeigten) Lagervorzone ausgebildet. Der Regalbau 24 ist beispielsweise in den Figuren 5 und 6 erkennbar. Ferner sind die Kanalschienen 25 Teil des Regalbaus 24. Zum Auslagern einer Palette 15 aus dem Regal kann ein dort verkehrendes Shuttle 19 diese Palette 15 aufladen und zur Übergabestation 1 transportieren. Hierfür fährt das Shuttle 19 mit geeigneten Rädern oder dergleichen auf den Fahrschienen 9.1 innerhalb des Regalbaus 24 zur Übergabestation 1 und auf den Fahrschienen 9 der Übergabestation 1 in diese hinein.

Die Übergabe verläuft dann für die beiden dargestellten Varianten der Übergabestation 1 unterschiedlich ab und, wird deshalb im Hinblick auf die Figuren 1 bis 6 sowie im Hinblick auf die Figur 7 separat erläutert.

Bei der in den Figuren 1 bis 6 gezeigten Variante der Übergabestation 1 erfolgt die Übergabe auf folgende Weise:
Befindet sich die Übergabestation 1 in der ersten Position gemäss Figur 1, so sind das erste Flächenelement 11 und die Fahrschiene 9 hochgeklappt. Ein Sensor des Shuttles 19 nimmt das erste Flächenelement 11 als Hindernis wahr und sorgt somit dafür, dass das Shuttle 19 nicht in die Übergabestation 1 einfährt, solange diese sich in der ersten Position gemäss Figur 1 befindet. Bei diesem Sensor kann es sich um einen Kollisionssensor zur Verhinderung von Kollisionen handeln, welcher als übliches Bordmittel des Shuttles 19 in diesem eingebaut sein kann. Nachdem die Fahrschiene 9 und das erste Flächenelement 11, angetrieben durch den Motor 7.1 und das Koppelgetriebe 8, heruntergeklappt wurden, sich die Übergabestation 1 also in der zweiten Position gemäss Figur 2 befindet, kann ein Shuttle 19 über den ersten Eingang 2 auf den Fahrschienen 9 in negativer x-Richtung in die Übergabestation 1 einfahren. Der Motor 7.1 sorgt also mit Hilfe des Koppelgetriebes 8 für die Bewegung der klappbaren Fahrschienen 9. Das Shuttle 19 kann, gesteuert durch seine Sensoren oder einem Befehl einer Steuerungseinrichtung folgend, nach dem Herunterklappen der Fahrschienen 9 vollständig auf den Fahrschienen 9 in die Übergabestation 1 einfahren. Gegenüber des ersten Eingangs 2 ist beidseits jeweils ein Herausfall-Schutz 16 vorgesehen, um zu verhindern, dass das Shuttle 19 bei fehlerbedingt zu weitem Einfahren in die Übergabestation 1 aus dieser herausfällt. Dies ist in Figur 6 gut erkennbar. Wie beispielsweise in Figur 2 erkennbar ist, verhindert das zweite Flächenelement 12 in dieser Position ein Einfahren des Flurförderzeugs 20 durch den zweiten Eingang 3, weil ein entsprechender Sensor des Flurförderzeugs 20 das zweite Flächenelement 12 als Hindernis wahrnimmt.

Nach dem Einfahren senkt das Shuttle 19 die Palette 15 mit Hilfe seiner Hub-einrichtungen 22 ab, um diese auf den Abstell-Schienen 4 zu platzieren. Die Abstell-Schienen 4 dienen als Abstell- und Aufnahmeplatz für die Palette 15.

Wurde die Palette 15 vor dem Absenken auf dem Shuttle 19 so platziert, dass sie im Vergleich zu einer idealen Position auf dem Shuttle 19 zumindest auch in z-Richtung verschoben oder entsprechend verdreht ist, so gleitet die Palette 15 beim Absenken und Absetzen innerhalb der Übergabestation 1 in negativer y-Richtung an zumindest einer der Zentrier-Schienen 5 entlang, was eine Zentrierung, d.h. eine korrekte Ausrichtung entlang der z-Achse, nötigenfalls auch eine Drehung der Palette 15, bewirkt.

Wurde die Palette 15 vor dem Absenken auf dem Shuttle 19 so platziert, dass sie im Vergleich zu einer idealen Position auf dem Shuttle 19 zumindest auch in x-Richtung verschoben oder entsprechend verdreht ist, so gleitet die Unterkante 17 der Palette 15 beim Absenken und Absetzen innerhalb der Übergabestation 1 in negativer y-Richtung an zumindest einer der Zentrier-Schienen Zentrier-Flächen 18 der Zentrier-Anschläge 6 entlang, was eine Zentrierung, d.h. eine korrekte Ausrichtung in x-Richtung, nötigenfalls auch eine Drehung der Palette 15, bewirkt.

Beim Absenken können auch beide vorbeschriebenen Zentrierungen an den Zentrier-Schienen 5 und an den Zentrier-Anschlägen 6 zeitgleich erfolgen, wenn die Palette 15 entsprechend fehlerhaft auf dem Shuttle 19 positioniert wurde.

Das vorbeschriebene Absenken wird von den Hub-Einrichtungen 22 des Shuttles 19 bewerkstelligt, welche in Figur 6 in der eingefahrenen Position dargestellt sind. Figur 6 zeigt somit die Situation unmittelbar nachdem das Shuttle 19 die Palette 15 abgestellt hat, aber noch bevor es die Übergabestation 1 verlassen hat.

Nachdem das Shuttle 19 die Palette 15 auf den Abstell-Schienen 4 abgestellt hat, liegt die in Figur 6 gezeigte Situation vor. Das Shuttle 19 verlässt dann die Übergabestation 1 durch den ersten Eingang 2 in x-Richtung. Daraufhin werden die Fahrschienen 9 hochgeklappt. Eine solche Situation nachdem das Shuttle 19 die Übergabestation 1 verlassen hat, wobei die Palette 15 dort platziert wurde, ist in Figur 3 gezeigt. Wie in den Figuren 3 und 1 im Gegensatz zur Figur 2 gut erkennbar ist, folgt das drehbar über das Befestigungselement 23 an der Fahrschiene 9 festgelegte zweite Flächenelement 12 der Bewegung der Fahrschiene 9 beim Hochklappen, so dass dieses zweite Flächenelement 12 die Einfahrt des Flurförderzeugs 20 nicht mehr verhindert. Dies ist auch in Figur 5 gut erkennbar.

Das erste Flächenelement 11 befindet sich nach dem Hochklappen der Fahrschienen 9 in der hochgeklappten Position gemäss Figur 1 und verhindert ein z.B. fehlerbedingtes Einfahren eines Shuttles 19 in die Übergabestation.

Das Flurförderzeug 20 fährt nach dem Hochklappen der Fahrschiene 9 in die Übergabestation 1 ein. Die Situation nach diesem Einfahren ist in Figur 5 dargestellt. Mit seinen Hub-Einrichtungen 22 hebt das Flurförderzeug die Palette 15 soweit an, bewegt sie also in y-Richtung nach oben, dass die Palette 15 beim Verlassen der Übergabestation 1 nicht mit den Zentrier-Anschlägen 6 kollidiert, was zu einer Verschiebung der Palette 15 auf dem Flurförderzeug 20 führen würde. Dann verlässt das Flurförderzeug 20 die Übergabestation 1 in negativer x-Richtung.

Eine Übergabe der Palette 15 von dem Flurförderzeug 20 auf das Shuttle 19 erfolgt in umgekehrter Reihenfolge:
Befindet sich die Übergabestation 1 in der in Figur 1 gezeigten Position, so verhindert das erste Flächenelement 11 das Einfahren eines Shuttles 19 und das mit der Palette 15 beladene Flurförderzeug 20 kann durch den zweiten Eingang 3 in die Übergabestation 1 einfahren, weil das zweite Flächenelement 12 von einem entsprechenden Kollisionssensor des Flurförderzeugs nicht als Hindernis erkannt wird. Beim Einfahren des Flurförderzeugs 20 in die Übergabestation 1 wird die Palette 15 wie vorstehend beschrieben in y-Richtung weit genug angehoben, um nicht an den Zentrier-Anschlägen 6 hängen zu bleiben. Anschliessend erfolgt beim Absenken eine Zentrierung wie bereits beschrieben. Anschliessend verlässt das Flurförderzeug 20 die Übergabestation 1. Danach wird die Fahrschiene 9 heruntergeklappt, so dass sich die Übergabestation 1 in der zweiten Position befindet, die in Figur 2 gezeigt ist. Jetzt kann das Shuttle 19 über den ersten Eingang 2 in entgegengesetzter, d.h. negativer x-Richtung in die Übergabestation 1 einfahren und die bereits zentrierte bzw. korrekt positionierte Palette 15 aufnehmen, um diese beispielsweise im Regal einzulagern.

Bei der in den Figur 7 gezeigten zweiten Variante der Übergabestation 1 erfolgt die Übergabe auf folgende Weise:
Das Shuttle 19 fährt durch den ersten Eingang 2 in die Übergabestation 1 ein. Hierbei bewegt sich das Shuttle zunächst auf den Fahrschienen 9.1 im Regalbau 24, welche sich fluchtend an die Fahrschienen 9 der Übergabestation 1 anschliessen. Das Shuttle fährt vollständig in die Übergabestation 1 ein und senkt die Palette 15 mit Hilfe seiner Hub-Einrichtungen 22 ab, wobei die Palette auf den Übergabe-Förderern 21 platziert wird. Bei dem Absenken der Palette 15 kann diese analog zu der in Bezug auf die Figuren 1 bis 6 beschriebenen Zentrierung an den in Figur 7 gezeigten Zentrier-Schienen 5 entlanggleiten. Hierbei können Fehlplatzierungen im Sinne einer Verschiebung entlang der z-Richtung als auch im Sinne einer Rotation innerhalb der x-z-Ebene korrigiert werden. Ist die Palette 15 beispielsweise im Vergleich zur idealen Position auf dem Shuttle 19 in z-Richtung verschoben, so erfolgt eine Positionskorrektur durch entlanggleiten an der Zentrier-Schiene 5 beim Absenken der Palette 15, wobei diese in negativer z-Richtung verschoben wird. Analoges gilt für eine Fehlplatzierung im Sinne einer Rotation um eine parallel zur y-Achse verlaufende Achse, welche durch eine entsprechende Rotation innerhalb der x-z-Ebene korrigiert wird. Nach dem Absenken der Palette 15 transportieren die Übergabeförderer 21, angetrieben von dem Motor 7.2, die Palette 15 daraufhin in negativer x-Richtung zu den Kettenförderern 26, von denen in Figur 7 nur ein Abschnitt dargestellt ist.

In der Übergabestation 1 gemäss Figur 7 erfolgt also die Übergabe einer Palette 15 von einem Shuttle 19 an einen Kettenförderer 26 und umgekehrt.

Wird eine Palette 15 von dem Kettenförderer 26 in x-Richtung zu der Übergabestation 1 der Figur 7 transportiert, so übernimmt der Übergabe-Förderer 21 die Palette 15. Hierbei kann eine Zentrierung der Palette 15 an den Zentrier-Schienen 5 erfolgen. Wurde die Palette 15 auf den Übergabe-Förderer 21 im Vergleich zu einer idealen Position innerhalb der x-z-Ebene verdreht abgestellt, so kann diese Fehlpositionierung problemlos korrigiert werden. Dies gilt insbesondere, wenn die Zentrier-Schienen 5 abgewinkelte Abschnitte 28 umfassen.

Für alle gezeigten Varianten der Übergabestation 1 gilt: Durch diese in positiver und negativer Richtung zur Mitte der Übergabestation 1 hin abnehmende lichte Weite in z-Richtung, welche von den abgewinkelten Abschnitte 28 bewirkt wird, kann eine Zentrierung auch erfolgen, wenn die Palette 15 nicht in negativer y-Richtung abgelassen wird. Die abgewinkelten Abschnitte 28 bewirken also, dass eine Zentrierung auch dann problemlos erfolgen kann, wenn die Palette lediglich in positiver oder negativer x-Richtung in die Übergabestation 1 eingefahren wird. Die abgewinkelten Abschnitte 28 in den Figuren 1 und 7 bewirken, dass bei einer Bewegung in positiver oder negativer x-Richtung eine in z-Richtung gemessene lichte Weite zwischen den Zentrier-Schienen 5 zur Mitte der Übergabestation 1 hin abnimmt.

Aus Sicht des Shuttles 19 dienen die Übergabe-Förderer 21 als Abstell- und Aufnahmeplatz für die Palette 15.

Im Hinblick auf Figur 7 ist zu beachten, dass der besseren Übersicht halber nur das Shuttle 19, nicht aber die zu übergebende Palette 15 dargestellt wurden.

Die in den Figuren 1 bis 6 gezeigte Übergabestation 1 umfasst eine einzige Lichtschranke 13, deren Lichtstrahl 14 derart diagonal innerhalb der Übergabestation 1 verläuft, dass die Lichtschranke 13 die Anwesenheit sowohl eines Shuttles 19 als auch eines Flurförderzeugs 20 innerhalb der Übergabestation 1 feststellen kann.

Aus den Figuren 1 bis 6 geht hervor, dass das Shuttle 19 und das Flurförderzeug 20 auf unterschiedlichen Höhenniveaus in die Übergabestation 1 einfahren. Der Motor 7.1 und das zugehörige Koppelgetriebe 8 sind hierbei innerhalb der Übergabestation 1 nahe des ersten Eingangs 2 aber unterhalb eines Höhenniveaus der Fahrschiene 9 angeordnet. Auf diese Weise kann das Flurförderzeug 20 bis unmittelbar vor den Motor 7.1 in x-Richtung durch den zweiten Eingang 3 in die Übergabestation 1 einfahren. Das Shuttle 19 kann oberhalb des Motors 7.1 durch den ersten Eingang 2 in die Übergabestation 1 einfahren. Weder das Shuttle 19 noch das Flurförderzeug 20 wird somit durch den Motor 7.1 und/oder das Koppelgetriebe 8 an der Einfahrt gehindert.

In Bezug auf die schematischen Figuren 12 ff. sei nachfolgend nochmals das Wirkprinzip der Zentrierung bzw. Positionskorrektur erläutert.

Grundsätzlich kann eine Positionskorrektur erfolgen, indem die Palette 15 entweder in negativer y-Richtung von den Hub-Einrichtungen 22 abgesenkt wird, oder während das Flurförderzeug 20 in x-Richtung durch den zweiten Eingang 3 in die Übergabestation 1 einfährt.

Liegt die Fehlpositionierung gemäss Figur 10 vor, so kann die Palette 15 beispielsweise an dem links in Figur 12 angedeuteten Abschnitt 33 entlanggleiten, wodurch sie in z-Richtung, d.h. nach rechts in Figur 12, verschoben und somit zentriert wird. Alternativ kann die Zentrierung durch eine Bewegung der Palette 15 in x-Richtung erfolgen, wenn beispielsweise das Shuttle 20 oder ein Übergabe-Förderer 21, welcher anstelle der Abstell-Schiene 4 vorhanden ist, die Palette 15 in der Anordnung nach Figur 15 in x-Richtung bewegt.

Die vorstehenden Überlegungen gelten nicht nur für die Figuren 12 und 15, sondern für sämtliche Figuren 12 bis 20 analog.

Liegt eine der in den Figuren 8 oder 9 gezeigten Fehlpositionierungen vor, so können diese im Wesentlichen auf dieselbe Weise korrigiert werden, wie dies vorstehend für die Figur 10 erläutert wurde.

Liegt die in Figur 11 gezeigte Fehlpositionierung vor, so kann diese durch In-Kontakt-Treten mit den Zentrier-Anschlägen 6 korrigiert werden, welche in den schematisch gezeichneten Figuren 12 ff. lediglich in Figur 15 angedeutet sind, aber in sämtlichen Ausführungsvarianten vorhanden sein können. Hierfür kann beispielsweise das Flurförderzeug 20 die Palette 15 entsprechend weit mittels der Hub-Einrichtungen 22 anheben, um die Palette 15 über den Zentrier-Anschlägen 6 schwebend in x-Richtung in die Übergabestation 1 einfahren zu können. Hierbei positioniert sich das Flurförderzeug 20 in x-Richtung derart, dass die Palette 15 beim Absenken an den (in Figur 15 nicht erkennbaren) Zentrier-Flächen 18 der Zentrier-Anschläge 6 entlanggleitet. Liegt sozusagen die zu Figur 11 umgekehrte Fehlpositionierung vor, bei welcher die Palette 15 zu weit in positiver x-Richtung verschoben auf dem Flurförderzeug 20 liegt, so kann dieses unmittelbar vor dem Einfahren in die Übergabestation derart vor den Zentrier-Anschlägen 6 anhalten und die Palette 15 absenken, dass die in x-Richtung gesehen vorderer Kante der Palette 15 an den Zentrier-Anschlägen 6 entlanggleiten kann.

**Obwohl nur einige bevorzugte Ausführungsbeispiele der Erfindung beschrieben und dargestellt wurden, ist es offensichtlich, dass der Fachmann zahlreiche Modifikationen hinzufügen kann, ohne Wesen und Umfang der Erfindung zu verlassen**. Insbesondere kann an folgende Modifikationen gedacht sein:
Bei dem Flurförderzeug kann es sich um ein FTS handeln.

Die Übergabestation 1 ist vorzugsweise Teil eines Regalbaus 24, besonders bevorzugt Teil eines Shuttle-Systems, beispielsweise Teil eines Kanallagers, insbesondere eines Paletten-Kanallagers.

Anstelle der Palette 15 können andere Ladungsträger zum Einsatz kommen, beispielsweise Werkstückträger, Gitterboxen, Kisten, etc.

Falls das Flurförderzeug 20 und das Shuttle 19 auf derselben Ebene in die Übergabestation 1 einfahren, so kann auf die Fahrschienen 9 verzichtet werden. Diese Überlegung gilt insbesondere für die Übergabestation 1 gemäss den Figuren 1 bis 6, kann jedoch auch für die Übergabestation gemäss Figur 7 gelten. In einem solchen Fall kann die Übergabestation 1 sehr einfach ausgeführt sein, und im Wesentlichen den Abstell- und Aufnahmeplatz 4 in Form der Abstell-Schienen sowie zumindest ein Zentriermittel, bspw. eine Zentrier-Schiene 5 oder ein Zentrier-Schienen-Paar 5 und/oder einen Zentrier-Anschlag 6 oder ein Paar solcher Zentrier-Anschläge 6 umfassen.

Das Flurförderzeug 20 kann in einer Lagervorzone arbeiten, welche sich unmittelbar an den zweiten Eingang 3 anschliessen kann.

Das reversible Bewegen der Fahrschiene 9 von der ersten in die zweite Position kann ein Klappen, ein Drehen, ein Schwenken, ein Ein- und Ausfahren oder dergleichen sein. Bevorzugt kann daran gedacht sein, die Fahrschiene 9 zu drehen.

Der zumindest eine Abstell- und Aufnahmeplatz ist vorzugsweise in Form eines Abstell-Schienen-Paars 4 ausgebildet. Alternativ können beispielsweise zwei Rollenbahnen, zwei Teleskopgabeln oder zwei Kettenförderer anstelle der zwei Abstell-Schienen den Abstell- und Aufnahmeplatz oder zumindest einen Teil dieses Abstell- und Aufnahmeplatzes bilden.

Der Übergabe-Förderer 21 ist vorzugsweise als Kettenförderer 21 ausgebildet. Es kann jedoch an andere Fördermittel gedacht sein.

Der Herausfall-Schutz 16 kann optional durch Lösen entsprechender Schrauben, Schnellverschlüsse o.ä. entfernt werden, um das durch den ersten Eingang 2 in die Übergabestation 1 eingefahrene Shuttle am zweiten Eingang 3 entnehmen zu können, falls dies, bspw. um eine Wartung oder Reparatur durchzuführen, nötig ist.

Zur Feststellung, ob die Fahrschienen 9 in die vollständig eingeklappte oder vollständig ausgeklappte Endlage gelangt ist, können berührungslose Näherungsschalter eingesetzt werden, welche auch als Initiatoren bezeichnet werden.

Ausgehend von der in Figur 7 dargestellten Übergabestation kann daran gedacht sein, dass die Kettenförderer 26 einen zweiten Eingang 3 bilden, so dass ein Flurförderzeug 20 zwischen den Kettenförderern 26 in die Übergabestation 1 einfahren und anstelle der Kettenförderer 26 eine Palette 15 vom Shuttle 19 übernehmen kann.

Die Übergabestation kann sich als Schnittstelle innerhalb des Regalbaus 24 oder ausserhalb des Regalbaus, insbesondere unmittelbar vor dem Regalbau 24, beispielsweise in einer Vorzone befinden.

Obwohl in den Figuren 1 bis 6 nicht gezeigt, schliessen sich an die Fahrschienen 9 der Übergabestation 1 Fahrschienen 9.1 im Regalbau 24 an, welche nur in Figur 7 gezeigt sind.

Auch in der Variante gemäss Figur 7 kann daran gedacht sein, eine Lichtschranke 13 einzusetzen, um die Anwesenheit des Shuttles 19 zu erfassen.

Anstatt durch Absenken der Palette 15 kann eine Zentrierung an den Zentriermitteln 5, 6, insbesondere an den Zentrier-Anschlägen 6 auch erfolgen, indem eines der Fahrzeuge 19, 20 die Palette 15 gegen diese Zentrier-Mittel 5, 6 fährt. Im Falle der Zentrier-Schienen 5 erfolgt eine solche Zentrierung ohne Absenken der Palette 15 durch die Hub-Einrichtungen vorzugsweise, wenn die Zentrier-Schienen 5 konvergierend angeordnet sind, sich also in entlang der x-Achse in zumindest einer Richtung verjüngen.

Insbesondere in der in den Figuren 1 bis 6 gezeigten Übergabestation 1 sind die Zentrier-Anschläge vorzugsweise fest und dauerhaft auf den Abstell-Schienen 4 montiert, und somit relativ zu diesen nicht beweglich.

Obwohl in den Figuren 12 ff. Variationen der ersten Variante der Übergabestation 1 gemäss den Figuren 1 bis 6 mit den Abstell-Schienen 4 schematisch gezeigt ist, gelten die im Zusammenhang mit den Figuren 12 ff. gemachten Überlegungen auch für die Übergabestation 1 gemäss Figur 7 sowie anders gebaute Übergabestationen 1. Anstelle der Abstell-Schienen 4 in den Figuren 12 ff. kann also auch an Übergabe-Förderer 21 gedacht sein.

Die in den Figuren 12 bis 20 schematisch gezeigten Variationen können miteinander kombiniert werden.

Gemäss einer möglichen Ausgestaltung der Übergabestation 1 gemäss der dritten Variante kann, wie in Figur 7 gezeigt, die Ausdehnung der Übergabestation 1 in x-Richtung so gross sein, wie dies durch die gestrichelte Klammer angedeutet ist. Die in Figur 7 gezeigten Kettenförderer 26 sind in dieser Ausgestaltung nicht vorhanden, stattdessen ist der Übergabe-Förderer 21 in dieser Ausgestaltung deutlich länger. Dies ist in Figur 7 jedoch nicht dargestellt.

Vorzugsweise ist das erste Flächenelement 11 über das Koppelgetriebe 8 mit den Fahrschienen 9 verbunden, während das zweite Flächenelement 12 über das Befestigungselement 23 drehbar aber unmittelbar mit der Fahrschiene 9 verbunden ist. Varianten sind denkbar.

Beide Flächenelemente 11, 12 können bevorzugt fahnenartig ausgebildet sein. Varianten sind denkbar. Das fahnenartig ausgebildete zweite Flächenelement 12 hängt vorzugsweise durch die Wirkung der Schwerkraft nach unten, weshalb es sich beim Hochklappen der Fahrschiene 9 vorzugsweise ohne Weiteres aus dem zweiten Eingang 3, d.h. dem Einfahrtsbereich des Flurförderzeugs 20, heraus bewegt. Alternativen sind denkbar.

In der Variante der Übergabestation 1, welche in den Figuren 1 bis 6 gezeigt ist, fährt das Shuttle 19 auf den Fahrschienen 9 und somit auf einem anderen Höhenniveau, nämlich oberhalb des Flurförderzeugs 20 in die Übergabestation 1 ein. Beispielsweise in den Figuren 1 und 2 ist erkennbar, dass der Motor 7.1 und das Koppelgetriebe 8 unterhalb des Höhenniveaus der Fahrschiene 9 angeordnet sind. Das Shuttle 19 kann somit beim Einfahren in die Übergabestation 1 den Motor 7.1 problemlos fahrend überwinden. Gleichzeitig steht der Motor 7.1 dem durch den zweiten Eingang 3 einfahrenden Flurförderzeug 20 nicht im Weg, weil er nahe des ersten Eingangs 2 und somit weit vom zweiten Eingang 3 entfernt angeordnet ist.

Aus den Figuren 3 sowie 8 bis 11 geht hervor, dass die Palette 15 quer in die Übergabestation 1 einfahren kann. Eine lange Kante der rechteckigen Palette 15 verläuft somit beim Einfahren in Längsrichtung - d.h. x-Richtung - entlang der z-Achse. Es ist natürlich auch denkbar, dass eine lange Kante der Palette 15 beim Einfahren in Längsrichtung in x-Richtung verläuft, und die Palette 15 somit längs in die Übergabestation einfährt.

Ein Abstand und eine Ausdehnung der Zentrier-Anschläge 6 kann von den Figuren 1 bis 6 abweichen. Üblicherweise sind Ausdehnung und Abstand jedoch so gewählt, dass das Flurförderzeug 20 durch den zweiten Eingang 3 in die Übergabestation ein- und aus dieser ausfahren kann, wobei die angehobene Palette 15 nicht an den Zentrier-Anschlägen 6 hängenbleibt und eine Bewegung der zum Anheben verwendeten Hub-Einrichtungen 22 nicht durch die Ausdehnung der Zentrier-Anschläge 6 gestört wird.

**Bezugszeichenliste**

| | |
|---|---|
| 1 | Übergabestation |
| 2 | Erster Eingang |
| 3 | Zweiter Eingang |
| 4 | Abstell-Schiene (Abstell- und Aufnahmeplatz) |
| 5 | Zentrier-Schiene |
| 6 | Zentrier-Anschlag |
| 7 | Motor |
| 8 | Koppelgetriebe |
| 9 | Fahrschiene |
| 10 | Zentrierhilfe |
| 11 | Erstes Flächenelement |
| 12 | Zweites Flächenelement |
| 13 | Lichtschranke |
| 14 | Lichtstrahl |
| 15 | Palette |
| 16 | Herausfall-Schutz |
| 17 | Unterkante |
| 18 | Zentrier-Fläche |
| 19 | Shuttle |
| 20 | Flurförderzeug / FTS |
| 21 | Übergabe-Förderer (Abstell- und Aufnahmeplatz) |
| 22 | Hub-Einrichtung |
| 23 | Befestigungselement |
| 24 | Regalbau |
| 25 | Kanalschiene |
| 26 | Kettenförderer |
| 27 | Winkel |
| 28 | Abgewinkelte Abschnitte |
| 29 | Drehachse |
| 30 | Mittelpunkt der Palette 15 |
| 31 | Mittelpunkt der gewünschten Position |
| 32 | Gewünschte Position der Palette 15 |
| 33 | Abschnitt |
| 34 | Lichte Weite |

## Patentansprüche

1. Übergabestation (1) für die Übergabe eines Ladungsträgers (15) von einem ersten Fahrzeug (19) auf ein Fördermittel (26) und umgekehrt,
wobei die Übergabestation (1) einen ersten Eingang (2) umfasst, welcher die Einfahrt des ersten Fahrzeugs (19) erlaubt,
und wobei die Übergabestation (1) sich an das Fördermittel (26) anschliesst,
wobei die Übergabestation (1) zumindest einen aktiven Abstell- und Aufnahmeplatz (21) für den Ladungsträger (15) umfasst, wobei dieser Aufnahmeplatz von einem Übergabeförderer (21) gebildet wird, an welchem das erste Fahrzeug (19) den Ladungsträger (15) abstellen und aufnehmen kann,
**gekennzeichnet durch**
zumindest ein Zentriermittel (5, 6) zur Zentrierung eines Ladungsträgers, wobei das Zentriermittel (5, 6) derart in der Übergabestation (1) angeordnet ist, dass bei der Übergabe des Ladungsträgers (15) von dem Fördermittel (26) an das erste Fahrzeug (19) und umgekehrt eine Zentrierung erfolgen kann.

2. Übergabestation (1) nach Anspruch 1, **dadurch gekennzeichnet, dass** das Zentriermittel (5, 6) im Wesentlichen entlang einer Richtung verläuft, in welcher das zumindest eine Fahrzeug (19) in die Übergabestation (1) ein- oder aus dieser ausfährt, oder entlang welcher das Fördermittel (26) den Ladungsträger (15) in die Übergabestation (1) ein- oder aus der Übergabestation (1) heraus fördert.

3. Übergabestation (1) nach einem der Ansprüche 1 oder 2, **dadurch gekennzeichnet, dass** das Zentriermittel (5, 6) orthogonal zu einer Richtung verläuft, in welcher das zumindest eine Fahrzeug (19) in die Übergabestation (1) ein- oder aus dieser ausfährt, oder entlang welcher das Fördermittel (26) den Ladungsträger (15) in die Übergabestation (1) ein- oder aus der Übergabestation (1) heraus fördert.

4. Übergabestation (1) nach einem der vorangehenden Ansprüche, **gekennzeichnet durch** einen Sensor, welcher eingerichtet ist, eine Anwesenheit des Shuttles (19) in der Übergabestation (1) zu erkennen.

5. Regal umfassend eine Übergabestation (1) nach zumindest einem der vorangehenden Ansprüche, wobei die Übergabestation (1) als Schnittstelle zwischen dem Regal und einem dem Regal vorgelagerten Bereich, beispielsweise einer Lagervorzone, ausgebildet ist.

6. Shuttle-System umfassend ein Regal nach Anspruch 5 und ein Fahrzeug (19).

7. Verfahren zur Übergabe eines Ladungsträgers in einer Übergabestation (1) gemäss einem der Ansprüche 1 bis 4, das Verfahren umfassend folgende Schritte:
- Ein Fördermittel (26) oder ein Fahrzeug (19) stellt einen Ladungsträger (15) auf einem Abstell- und Aufnahmeplatz (4, 21) der Übergabestation (1) ab,
- Der Ladungsträger (15) wird zentriert,
- Das Fördermittel (26) oder das Fahrzeug (19) nimmt den Ladungsträger (15) von dem Abstell- und Aufnahmeplatz (4, 21) der Übergabestation (1) auf.

8. Verfahren nach Anspruch 7 zur Übergabe eines Ladungsträgers (15) in einer Übergabestation (1) mit einem Übergabe-Förderer (21) umfassend folgende Schritte:
- Ein Ladungsträger (15) wird von einem Shuttle (19) oder von einem Fördermittel (26) auf dem Übergabe-Förderer (21) der Übergabestation (1) abgestellt,
- Der Ladungsträger (15) wird zentriert,
- Das Fördermittel (26) oder das Shuttle (19) nimmt den Ladungsträger (15) von dem Übergabe-Förderer (21) der Übergabestation (1) auf.
